(19) Europäisches Patentamt
European Patent Office
Office européen des brevets

(11) EP 2 357 802 A1

(12) EUROPEAN PATENT APPLICATION

(43) Date of publication:
17.08.2011 Bulletin 2011/33

(51) Int Cl.:
*H04N 5/445* (2011.01)

(21) Application number: 10171802.1

(22) Date of filing: 03.08.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 25.12.2009 JP 2009296134

(71) Applicant: Kabushiki Kaisha Toshiba
Tokyo 105-8001 (JP)

(72) Inventors:
• Onodera, Mieko
Tokyo 105-8001 (JP)
• Fujibayashi, Toshihiro
Tokyo 105-8001 (JP)
• Horiguchi, Takeo
Tokyo 105-8001 (JP)
• Saijo, Hitoshi
Tokyo 105-8001 (JP)
• Tanaka, Sayoko
Tokyo 105-8001 (JP)

(74) Representative: Henkel, Feiler & Hänzel
Maximiliansplatz 21
80333 München (DE)

(54) **Display processing device, display processing method, and computer program product**

(57) According to one embodiment, a display processing device includes an operation receiver (111), a relation calculation module (108, 502), a similarity determination module (109, 201, 301, 401, 503), a grouping module (109, 201, 301, 401, 503), a display information generator (113, 505), and a display module (114, 506). The operation receiver (111) receives operation to select key content. The relation calculation module (108, 502) calculates relation between the key content and second contents other than the key content with respect to each of items. The similarity determination module (109, 201, 301, 401, 503) determines similarity between the second contents. The grouping module (109, 201, 301, 401, 503) groups similar second contents. The display information generator (113, 505) generates first display information representing the key content, pieces of second display information representing the second contents, respectively, and third display information representing a group of the second contents. The display module (114, 506) displays a display screen divided into predetermined areas, in which the second display information and the third display information are each arranged in corresponding one of the predetermined areas based on the relation.

FIG.6

**Description**

FIELD

Embodiments described herein relate generally to a display processing device, a display processing method, and a computer program product.

BACKGROUND

In recent years, with increased capability of AV equipment for storing contents and improved seamless accessibility of contents between pieces of equipment, let alone within the same equipment, or on a network, there has been a proliferation in the number of contents accessible to users. With such an increase in the number of accessible contents, there have been proposed technologies for retrieving desired content from various types of contents. For example, Japanese Patent Application Publication (KOKAI) No. 2009-80580 discloses a conventional technology for displaying a list of contents. In the list, content as a search key (key content) is located in the center, and a plurality of contents related to the key content are located spaced apart from the center according to the degree of relation to the key content.

When a list is displayed that indicates contents related to key content as in the case of the conventional technology, even the same contents having the same name (title) are displayed individually if different in, for example, broadcast date and time, service provider, or the like. This reduces the actual types of contents that can be displayed at the same time, resulting in a lack of diversity of contents.

It is therefore an object of the invention to provide a display processing device, a display processing method, and a computer program product capable of facilitating retrieval of content related to key content from various types of contents.

SUMMARY

To overcome the problems and achieve the object mentioned above, according to an embodiment, a display processing device comprises an operation receiver, a relation calculation module, a similarity determination module, a grouping module, a display information generator, and a display module. The operation receiver is configured to receive operation to select key content as a search key. The relation calculation module is configured to calculate relation between the key content and each of second contents other than the key content with respect to each of a plurality of items. The similarity determination module is configured to compare the second contents to determine similarity between the second contents. The grouping module is configured to group second contents determined to be similar by the similarity determination module. The display information generator is configured to generate first display information representing the key content, pieces of second display information representing the second contents, respectively, and third display information representing a group of the second contents grouped by the grouping module. The display module is configured to display a display screen that is radially divided from a predetermined position into predetermined areas each corresponding to one of the items, in which the first display information is arranged at the predetermined position, and the second display information and the third display information are each arranged in corresponding one of the predetermined areas based on the relation calculated by the relation calculation module.

According to another embodiment, there is provided a display processing method comprising: an operation receiver receiving operation to select key content as a search key; a relation calculation module calculating relation between the key content and each of second contents other than the key content with respect to each of a plurality of items; a similarity determination module comparing the second contents to determine similarity between the second contents; a grouping module grouping second contents determined to be similar; a display information generator generating first display information representing the key content, pieces of second display information representing the second contents, respectively, and third display information representing a group of the second contents; and a display module displaying a display screen that is radially divided from a predetermined position into predetermined areas each corresponding to one of the items, in which the first display information is arranged at the predetermined position, and the second display information and the third display information are each arranged in corresponding one of the predetermined areas based on the relation calculated by the relation calculation module.

According to still another embodiment, a computer program product that causes a computer to implement the above method.

As described above, according to an embodiment, it is possible to facilitate retrieval of content related to key content from various types of contents.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary block diagram of a display processing device according to a first embodiment;
FIG. 2 is an exemplary schematic diagram of metadata when a television (TV) program is content in the first embodiment;
FIG. 3 is an exemplary schematic diagram for explaining a common keyword in the first embodiment;
FIG. 4A is an exemplary schematic diagram for explaining the operation of displaying display information in the first embodiment;
FIG. 4B is another exemplary schematic diagram for explaining the operation of displaying the display information in the first embodiment;
FIG. 5 is still another exemplary schematic diagram for explaining the operation of displaying the display information in the first embodiment;
FIG. 6 is still another exemplary schematic diagram for explaining the operation of displaying the display information in the first embodiment;
FIG. 7 is still another exemplary schematic diagram for explaining the operation of displaying the display information in the first embodiment;
FIG. 8 is still another exemplary schematic diagram for explaining the operation of displaying the display information in the first embodiment;
FIG. 9 is an exemplary flowchart of the operation of the display processing device to display a list information screen in the first embodiment;
FIG. 10 is an exemplary block diagram of a display processing device according to a second embodiment;
FIG. 11 is an exemplary schematic diagram of a list information screen generated by the display processing device illustrated in FIG. 10 in the second embodiment;
FIG. 12 is another exemplary schematic diagram of a list information screen generated by the display processing device illustrated in FIG. 10 in the second embodiment;
FIG. 13 is an exemplary block diagram of a display processing device according to a third embodiment;
FIG. 14 is an exemplary schematic diagram of a list information screen generated by the display processing device illustrated in FIG. 13 in the third embodiment;
FIG. 15 is another exemplary schematic diagram of a list information screen generated by the display processing device illustrated in FIG. 13 in the third embodiment;
FIG. 16 is an exemplary block diagram of a display processing device according to a fourth embodiment;
FIG. 17 is an exemplary schematic diagram of a list information screen generated by the display processing device illustrated in FIG. 16 in the fourth embodiment;
FIG. 18 is an exemplary block diagram of a display processing device according to a fifth embodiment; and
FIG. 19 is an exemplary flowchart of the operation of the display processing device illustrated in FIG. 18 to display a list information screen in the fifth embodiment.

DETAILED DESCRIPTION

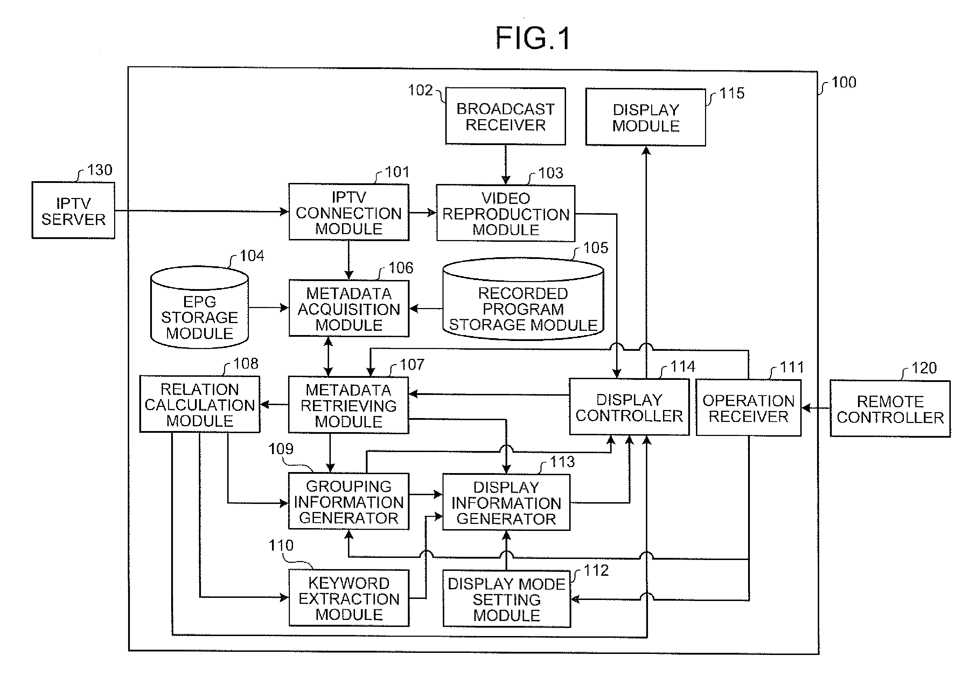

Various embodiments will be described hereinafter with reference to the accompanying drawings.
Although a display processing device of the embodiments is described below as being applied to a television (TV), this is by way of example only and is not to be construed to be limiting. The display processing device may be applied to any display device capable of displaying video or the like. Briefly, in the following embodiments, when a user retrieves key content as a search key and content other than the key content (hereinafter, "other content") that is related to the key content from a plurality of contents, the display processing device displays the key content with other contents related to the key content in response to user selection of the key content.
A description will be given of the configuration of a display processing device 100 according to a first embodiment. FIG. 1 is a block diagram of the display processing device 100. As illustrated in FIG. 1, the display processing device 100 comprises an Internet protocol television (IPTV) connection module 101, a broadcast receiver 102, a video reproduction module 103, an electronic program guide (EPG) storage module 104, a recorded program storage module 105, a metadata acquisition module 106, a metadata retrieving module 107, a relation calculation module 108, a grouping information generator 109, a keyword extraction module 110, an operation receiver 111, a display mode setting module 112, a display information generator 113, a display controller 114, and a display module 115.

The IPTV connection module 101 is an interface that connects the display processing device 100 to an IPTV server 130. The IPTV server 130 provides services to distribute video such as TV programs and films using IP. In response to a request from the display processing device 100, the IPTV server 130 delivers thereto content such as video and metadata of the content, which will be described later.

The broadcast receiver 102 receives the content of video (TV program) broadcasted by TV broadcasting through an antenna or a cable, and a tuner (not illustrated).

The video reproduction module 103 acquires the content of video that a user desires to reproduce. Examples of the content include the content of a TV program, etc. received by the broadcast receiver 102, the content of video acquired from the IPTV server 130 through the IPTV connection module 101, and the content of video stored in the recorded program storage module 105. The video reproduction module 103 decodes (reproduces) the content thus acquired, and outputs it to the display controller 114.

The EPG storage module 104 is a storage medium such as a hard disk drive (HDD) or a memory for storing an electronic program guide obtained from an external server that manages and distributes the electronic program guide. More specifically, the EPG storage module 104 obtains via a communication module (not illustrated) an electronic program guide for TV, cable television (CATV), communications satellite (CS) broadcasting, broadcasting satellite (BS) broadcasting, and the like from a service provider server connected through a network such as the Internet. Thus, the EPG storage module 104 stores the electronic program guide. It is assumed herein that the electronic program guide contains information on programs to be broadcasted during a period from the present time to a certain time in the future (e.g., after one week).

The recorded program storage module 105 is a storage medium such as HDD or memory for storing content such as video. For example, if the display processing device 100 is TV with HDD, the recorded program storage module 105 stores video of a recorded TV program as the content. Examples of the content include video in a digital versatile disk (DVD) and video captured by a video camera.

The recorded program storage module 105 also stores metadata related to the content in association therewith. The term "metadata" as used herein refers to a set of information indicating unique characteristics of the content. The unique characteristics include the title of the content and the broadcast date and time of the content. For example, if the content is a TV program, the metadata indicates information (program information) on the TV program such as the title, the channel, the broadcast date and time, the cast, the brief description (subtitle), and the genre. This metadata is provided to the recorded program storage module 105 with the content and stored therein.

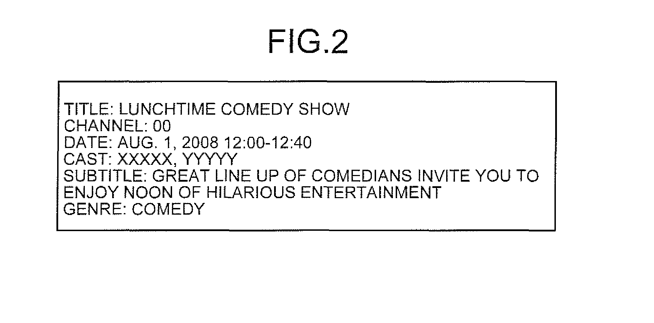

FIG. 2 illustrates the metadata when a TV program is the content. The metadata illustrated in FIG. 2 represents information related to the content of a recorded TV program. The recorded program storage module 105 stores as metadata information, such as the title of the TV program "Lunchtime Comedy Show", the channel "00", the broadcast date and time "August 1, 2008,12:00 -12:40", the cast "xxxxx, yyyyy", the subtitle "Great line up of comedians invite you to enjoy a noon of hilarious entertainment", and the genre "comedy".

Although an example is described above in which the metadata is provided as being preset, this is by way of example and not of limitation. The recorded program storage module 105 may receive information provided by a user thorough an input device such as a remote controller 120 and store it as metadata in association with the content.

The metadata acquisition module 106 acquires metadata of all contents (key content and other contents) in response to a request from the metadata retrieving module 107. More specifically, for example, the metadata acquisition module 106 acquires the metadata of the contents from the recorded program storage module 105. The metadata acquisition module 106 may request the IPTV server 130 for the metadata of the contents through the IPTV connection module 101 to acquire the metadata delivered from the IPTV server 130. The metadata acquisition module 106 may also acquire the metadata of the contents from an electronic program guide stored in the EPG storage module 104.

Upon receipt of the selection of the key content received by the operation receiver 111 through the display controller 114, the metadata retrieving module 107 outputs the metadata of all the contents (the key content and the other contents) acquired by the metadata acquisition module 106 to the relation calculation module 108 and the display information generator 113.

The relation calculation module 108 calculates the relation of the other contents to the key content based on the metadata of the key content and the metadata of the other contents received from the metadata retrieving module 107 for each item (for example, title, channel, etc.) contained in the metadata.

More specifically, the relation calculation module 108 calculates relation RM of each content to the key content with respect to each item contained in the metadata of the key content using the following Equation 1:

$$\text{relation RM} = \sum_{n=1}^{N} fa_n(M11(n), M21(n)) \times wa_n \qquad (1)$$

where N represents the total number of metadata items acquirable by the metadata acquisition module 106, M11 represents the metadata of the key content, M21 represents the metadata of any of the other contents, and (n) represents n-th metadata acquired by the metadata acquisition module 106. Further, $fa_n(M11(n), M21(n))$ is a function that returns the relation between metadata $M11(n)$ and $M21(n)$ as $RM_n$, and $wa_n$ is a value (n = 1, ..., N) indicating weight. The relation with respect to each item is represented by $RM_n \times wa_n$, and hereinafter will be referred to as "item relation".

As described above, although various types of information may be acquired as the metadata, the metadata will be described below as containing a set of five items (N = 5), i.e., recoding date and time, title of content, channel, genre, and cast, for simplicity. The five items of the metadata will be described as n = 1, 2, ..., 5 in the above order.

The relation RM of the other contents with respect to the key content can be represented by the weighted linear sum of item relations $RM_n \times wa_n$ (n: 1 to 5) of the five items as follows:

$$\mathtt{relation\ RM = RM_1 \times wa_1 + RM_2 \times wa_2 + RM_3 \times wa_3 + RM_4 \times wa_4 + RM_5 \times wa_5} \qquad (2)$$

where

$RM_1 = fa_1$ (recoding date and time of metadata M11, recoding date and time of metadata M21)
$RM_2 = fa_2$ (title of metadata M11, title of metadata M21)
$RM_3 = fa_3$ (channel of metadata mll, channel of metadata M21)
$RM_4 = fa_4$ (genre of metadata M11, genre of metadata M21)
$RM_5 = fa_5$ (cast of metadata M11, cast of metadata M21)

For example, $fa_1$ is a function that is larger for a smaller difference in recoding date and time between the metadata, M11 and m21 and is smaller for a larger difference in the recoding date and time. More specifically, $fa_1$ may be represented by using a relational expression as follows:

$$\mathtt{MO1/|rec\_data\ (M11)\ -\ rec\_data\ (M21)|}$$

where rec_data (x) is a function that uniquely converts the recoding date and time of x into an integer, MO1 is an arbitrary constant number, and |X| is a function indicating the size of X and is typically an absolute value. Specifically, rec_data (x) is a function that converts the recoding date and time into an integer such as seconds having elapsed from a reference date and time determined as 0.

While an example is described above in which a function g represented as $g(x) = MO1/|X|$ is applied to $fa_1$ (M11, M21) = g(rec_data (m11) - rec_data (M21)), it is not so limited. The function g may be a function with L2 norm as, for example, $g(x) = MO1/||x||$. In this case, $||x||$ is the square root of the sum of squares of the differences between elements that constitute X.

Other functions such as a sigmoid function and a gamma function may be applied to g(x). Besides, while an example is described above in which the function is larger as the recoding dates and times of the metadata M11 and M21 are closer, it is not so limited. The function may be smaller as the recoding dates and times of the metadata M11 and M21 are closer. Further, the function g may be large when a specific condition is satisfied.

For example, $fa_2$ is a function that is larger as more of the same letters or characters are contained in the character strings of the titles of the respective metadata M11 and M21. More specifically, if the title of the metadata M11 is "ABCDE" and that of the metadata M11 is "FGCDH", two letters "CD" are contained in both the titles. If the title of the metadata M11 is "ABCDE" and that of the metadata M11 is "FGHIE", one letter is contained in both the titles. Therefore, the value of $fa_2$ is larger in the former case. The relation may be determined based on a keyword contained in the brief description of a program in the same manner as the title basis.

While an example is cited above in which the number of the same letters or characters contained in both the titles are simply compared, this is not intended as a limitation. Additional conditions may be used such as that the function is larger as more of the same letters or characters are contained in both the titles from the top, or that even if no same letter is present in both the titles, when the titles have a common idea, they are determined to be the same. As an example of the latter case, a Japanese word "yakyu" is regarded as the same as "baseball", and the titles that contain the words "yakyu" and "baseball", respectively, are determined to contain the same character string.

Besides, when the titles have the same main character string and different sub character strings, they are likely to be of contents of the same series. Accordingly, in such a case, the value of $fa_2$ may be set to large. More specifically, for example, "ABCDE #2" and "ABCDE #3" are likely to be the titles of different episodes of the same drama series.

Therefore, in such a case, the value of $fa_2$ may be doubled. Note that the above is described by way of example only, and the comparison as described above may be accomplished with high accuracy by commonly known technologies such as approximate pattern matching and regular expression matching.

For example, $fa_3$ is a function that is large when the metadata M11 and M21 are of contents of the same channel. Simply, $fa_3$ may be a function that takes value MO2 when the metadata M11 and M21 are of contents of the same channel and otherwise takes value 0. The value MO2 is an arbitrary constant number. In addition, if the metadata M11 and M21 are of contents of affiliate channels, the value of $fa_3$ may be set to a different value. For example, $fa_3$ may be a function that returns value MO2/2 when the metadata M11 and M21 are of contents of affiliate channels. Further, $fa_3$ may be a function that returns value MO2/4 if the metadata M11 and M21 are of contents of affiliate channels but of different broadcast media. Note that the above is described by way of example only, and $fa_3$ may be an arbitrary function.

For example, $fa_4$ is a function that is large when the metadata M11 and M21 are of contents of the same genre. More specifically, $fa_4$ may be a function that takes value MO3 if the metadata M11 and M21 both belong to the same genre "sports" and otherwise takes value 0. In addition, if the metadata M21 belongs to the subgenre of the metadata M11 such as, for example, if the metadata M11 belongs to the genre "sports" and the metadata M21 belongs to the genre "baseball", $fa_4$ may be a function that takes value MO3/2. Further, even if the metadata M11 and M21 do not directly belong to the same genre, when they can be categorized in the same genre such as, for example, when the metadata M11 belongs to the genre "baseball" while the metadata M21 belongs to the genre "football" and the both are categorized in sports, $fa_4$ may be a function that takes value MO3/4. Note that the above is described by way of example only, and $fa_4$ may be an arbitrary function.

For example, $fa_5$ is a similar function to $fa_4$. More specifically, if the metadata M11 is of the content featuring "WW, XX, YY" and the metadata M21 is of the content featuring "XX, YY, ZZ", then the same two persons are casted for both the contents. In such a case, $fa_5$ may be a function that takes value $2 \times MO4$ (MO4: an arbitrary constant number), and that takes value 0 if there is no same person casted for both the contents. Besides, someone in the cast may be a member of a group. For example, if a person KK is a member of a group XX, and when the metadata M11 is of the content featuring "VV, WW, XX" and the metadata M21 is of the content featuring "KK, YY, ZZ", the person KK is casted in the content of M11 as a member of the group XX and also is casted in the content of M21. In such a case, $fa_5$ may be a function that returns value MO4/2.

In a similar fashion, the relation between groups or between people featured in the contents may be defined. For example, when the groups XX and YY belong to the same office or agency, $fa_5$ may be a function that returns value MO4/4. In this case, the relation between a person and a group or between a person, a group, and an office may be defined in the metadata or may be obtained from an external server (information site).

While an example is described above in which the relation is calculated not differentiating people in the cast list, this is not so limited. The relation may further be weighted according to the order on the cast list. For example, the derived relation is left as it is with respect to the first person on the cast list for the metadata M11, while it is weighted by 1/2 with respect to the second person and similarly is weighted by 1/3 with respect to the third person. The order on the cast list for the metadata M21 may also be taken into account in addition to that for the metadata M11. For example, if the second person on the cast list for the metadata M11 is the third person on the cast list for the metadata M21, the relation may be weighted by 1/2 with respect to the second person for the metadata M11 and may further be weighted by 1/3 with respect to the third person for the metadata M21. That is, the relation may be weighted by $1/2 \times l/3 = 1/6$. Besides, the relation may be weighted differently with respect to a star playing a leading role based on information on the cast or the like. For example, the derived relation may be double-weighted with respect to the star.

The grouping information generator 109 generates grouping information indicating similar contents that belong to the same group according to instruction information. The instruction information is received through the operation receiver 111 and indicates whether grouping display is ON or OFF.

When the instruction information indicates that grouping display is ON, the grouping information generator 109 compares other contents to determine similar contents. The grouping information generator 109 generates grouping information indicating that each set of other contents determined to be similar belongs to the same group. The grouping information generator 109 outputs the grouping information to the display information generator 113 and the display controller 114.

More specifically, the grouping information generator 109 specifies other contents with the relation RM higher than a predetermined value as related contents based on the relation RM of other contents to key content calculated by the relation calculation module 108. Further, the grouping information generator 109 determines similarity between the related contents based on the metadata thereof received from the metadata retrieving module 107. Thus, the grouping information generator 109 generates grouping information indicating that each set of related contents determined to be similar belongs to the same group.

It is assumed herein that the grouping information includes information capable of identifying members (a set of related contents) of the same group, information capable of identifying each group.

There is no particular limitation on how to determine the similarity. The similarity may be determined using a known technology, based on, for example, whether any of the following four conditions are satisfied, or a combination thereof.

The first condition is that the similar contents are those provided in advance with the same information by the user or a content provider. This is because contents of the same series are likely to be provided with the same information.

The second condition is that the similar contents are those that are partly or wholly the same. This is because, for example, episodes of the same series are likely to contain the same opening screen. When using this condition, the grouping information generator 109 compares representative images contained in the metadata and determines if they match.

The third condition is that the similar contents are those having the same main title or name. The fourth condition is that the similar contents are those having the same subtitle, the same theme, the same series name, or the like.

Upon receipt of instruction information to turn off grouping display through the operation receiver 111, the grouping information generator 109 terminates the process without generating grouping information.

The keyword extraction module 110 extracts, from the items contained in metadata related to the calculation of the relation RM of other contents to key content, an item contributing to the degree of the relation as a common keyword for each of the other contents. More specifically, keywords that match between metadata of key content and that of another content are regarded as a common keyword.

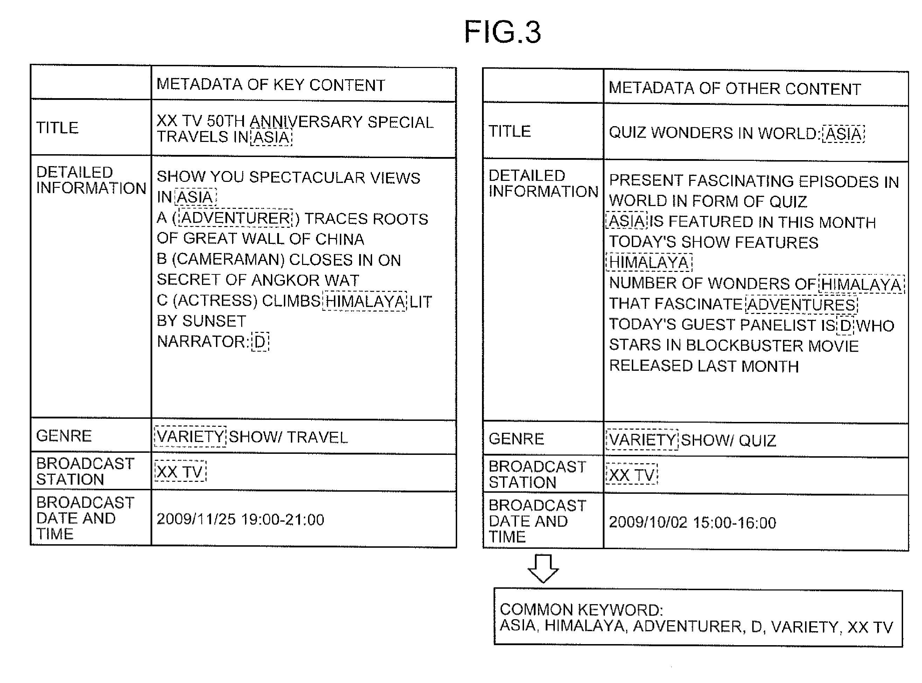

The common keyword may be a sentence or a word extracted from title, person's name, genre name, broadcast station, detailed information, and the like. It is assumed herein that even if keywords do not completely match, when they indicate the same idea such as "yakyu" and "baseball", they are regarded as matching. An example of the common keyword will be described with reference to FIG. 3. FIG. 3 is a schematic diagram for explaining the common keyword. In the example of FIG. 3, among keywords contained in metadata of another content, metadata of key content contains "Asia", "Himalaya", "adventurer", "D", "variety", and "XX TV". Thus, in this case, the common keywords of the other content are "Asia", "Himalaya", "adventurer", "D", "variety", and "XX TV". In FIG. 3, the common keywords are each encircled by a virtual line for the sake of convenience of description.

If there are a plurality of common keywords with respect to one content other than key content, the keyword extraction module 110 determines the priority to display the common keywords in descending order of contribution to the relation to the key content. The keyword extraction module 110 outputs the common keywords and priority information to the display information generator 113.

The operation receiver 111 receives user's operation. More specifically, when a user pushes a button on the remote controller 120, the operation receiver 111 recognizes the operation and receives an input provided by the operation. For example, when a user selects content (key content) as a search key using a button of the remote controller 120 from a plurality of contents of an electronic program guide displayed on the display module 115 to retrieve desired content as well as contents related to the desired content from a plurality of contents, the operation receiver 111 receives the selection of the content to specify it as key content for search. The operation receiver 111 may receive the selection of key content from a list information screen displayed on the display module 115, which will be described later. The list information screen displays pieces of display information of a plurality of other contents.

The key content may be content being reproduced. In this case, when a user pushes a button on the remote controller 120 while content is being reproduced, the operation receiver 111 receives the user's operation as a selection of the key content, i.e., an instruction to retrieve contents.

When a user specifies either one of standard mode or search mode as display mode with a button on the remote controller 120, the operation receiver 111 outputs the specified display mode to the display mode setting module 112.

Further, upon receipt of instruction information to turn on/off grouping display, the operation receiver 111 outputs the instruction information to the grouping information generator 109.

The display mode setting module 112 sets the display mode to either one of the standard mode or the search mode. The display mode setting module 112 may set the display mode to the standard mode by, for example, not setting a flag in a display mode flag area provided in a storage device (not illustrated). On the other hand, the display mode setting module 112 may set the display mode to the search mode by setting the flag in the display mode flag area. The display mode may be selectably specified by a user with a button on the remote controller 120. In this case, if a user selects either one of the standard mode or the search mode using the remote controller 120, the operation receiver 111 receives the selection, and the display mode setting module 112 sets the display mode to the selected mode.

The display mode setting module 112 may display a display mode selection menu screen on the display module 115 to allow the user to select the display mode from the display mode selection menu screen using an input device. The display mode setting module 112 may automatically switch the display mode between the standard mode and the search mode at regular time intervals. The display mode setting module 112 may switch the display mode to a predetermined mode in response to user's operation through the input device such as to change focused content.

The display information generator 113 generates display information representing the details of each content based on grouping information generated by the grouping information generator 109 and metadata of the content (key content and other contents) output from the metadata retrieving module 107.

More specifically, the display information generator 113 generates a single piece of display information (hereinafter, "group display information") from metadata of each of other contents (related contents) indicated by the grouping information. The group display information may be generated based on metadata of representative one of a set of contents indicated by the grouping information to represent the details of the representative content. The group display information may also be generated based on a common element extracted from the set of contents to represent the common details of the contents.

For example, if content is video data stored in the recorded program storage module 105, the display information generator 113 adds such items as a title to the representative image of the video data based on the metadata of the video data to generate display information to be displayed on the display module 115. Further, for example, if content is video data obtained from the IPTV server 130, the display information generator 113 adds such items as a title to the representative image of the video data based on the metadata of the video data to generate display information to be displayed on the display module 115. Still further, for example, if content is indicated by electronic program guide stored in the EPG storage module 104, the display information generator 113 generates display information to be displayed on the display module 115 based on the electronic program guide to indicate the title of a TV program, the broadcast date and time, the channel, the brief description of the TV program, and the like.

The display information generator 113 generate display information of other contents not belonging to a group and not indicated by the grouping information based on the metadata of the other continents.

The display information generator 113 also generates keyword display information indicating the common keywords based on the common keywords and the priority information output from the keyword extraction module 110. If there are a plurality of common keywords with respect to one content other than key content, the display information generator 113 arranges the common keywords in descending order of contribution to the relation to the key content. The display information generator 113 generates display information of other contents that contains corresponding keyword display information.

The display information generator 113 generates different display information depending on the display mode set by the display mode setting module 112. More specifically, if the standard mode is set as the display mode, the display information generator 113 generates standard mode display information that does not contain the keyword display information. Meanwhile, if the search mode is set as the display mode, the display information generator 113 generates search mode display information that contains the keyword display information.

The standard mode display information is formed only of the display information, while the search mode display information is formed of the keyword display information in addition to the display information. That is, the standard mode display information mainly displays information on content such as the representative image, title, broadcast station, channel, genre, broadcast date and time, and the like of the content.

On the other hand, the search mode display information displays a common keyword with emphasis thereon and only necessary information on content to identify the content (for example, only the title). The search mode display information may display only a common keyword. The common keyword may be displayed as text, an icon, an image, or the like. There is provided a storage device that stores a conversion table in which each keyword is associated with an icon, an image, or the like. The display information generator 113 converts a common keyword into an icon, an image, or the like based on the conversion table.

Upon generating display information based on grouping information, regardless of whether it is standard mode display information or search mode display information, the display information generator 113 differentiates the display information from that based on metadata of independent content (continent not belonging to a group) by using a different color, shape, or the like. This allows the user to visually recognize display information for a group of contents.

The display controller 114 reproduces and displays content output from the video reproduction module 103 on the display module 115.

As described above, when the operation receiver 111 receives an instruction from a user to retrieve content, the display controller 114 displays a list information screen indicating a list of display information of key content and that of other contents related to the key content on the display module 115 to allow the user to retrieve the content. In the standard mode, the display controller 114 displays a list information screen using standard mode display information (hereinafter, "standard mode list information screen"). On the other hand, in the search mode, the display controller 114 displays a list information screen using search mode display information (hereinafter, "search mode list information screen") . While the standard mode list information screen and the search mode list information screen are different in display information of contents, they are the same in arrangement of pieces of display information of key content and other contents. Accordingly, when the standard mode list information screen and the search mode list information screen need not be distinguished from each other, they are simply referred to as "list information screen".

In the list information screen, display information of key content is arranged in a desired position. With the position of the display information of the key content as the center, pieces of display information of other contents are arranged to form concentric polygons, for example, correspondingly to the directions of operation on an operation button such as an arrow key on the remote controller 120 or the keyboard. The screen is divided into display areas for predetermined items in radial directions from the center. The pieces of the display information of the other contents are arranged in the display areas such that the one with higher relation is closer to the center.

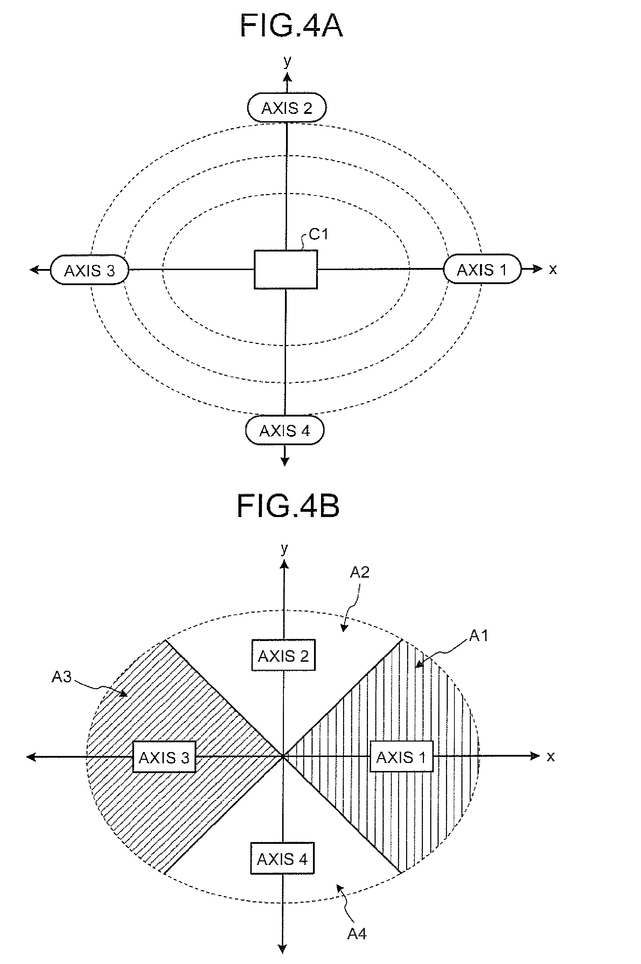

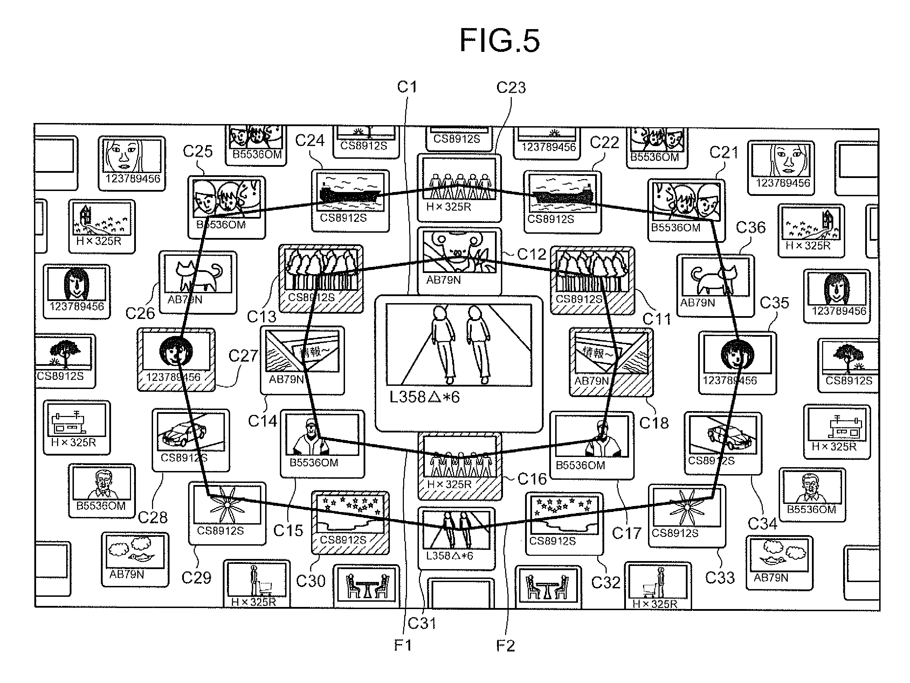

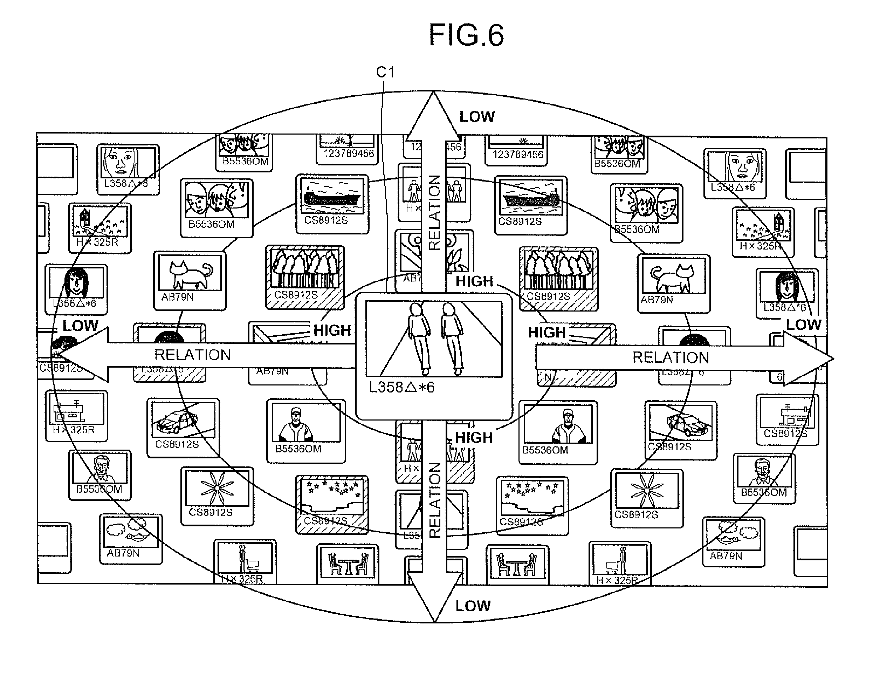

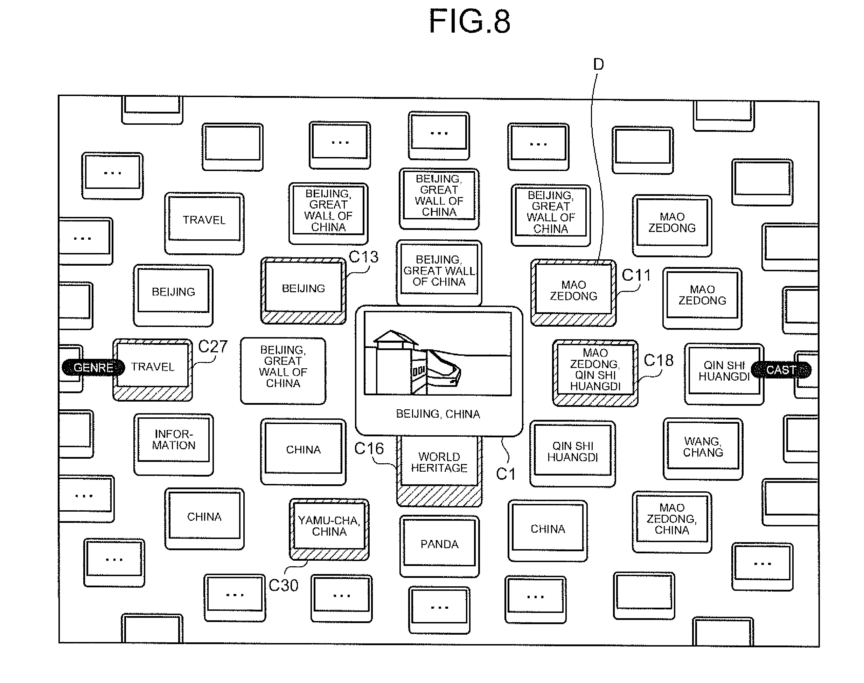

A description will be given of the operation of displaying the display information. FIGS. 4A to 10 are schematic diagrams for explaining the operation of displaying the display information. FIGS. 5 and 6 illustrate examples of a standard mode list information screen. FIG. 8 illustrates an example of a search mode list information screen.

As illustrated in FIG. 4A, the display controller 114 arranges display information C1 of key content at a desired position. The display controller 114 then sets, using the position of the display information C1 as the center, four axes (axes 1 to 4) in the positive x-axis direction, the positive y-axis direction, the negative x-axis direction, and the negative y-axis direction, respectively. Thereafter, the display controller 114 assigns each item contained in the metadata of the selected key content to one of the four axes. Referring to FIG. 2, as items contained in the metadata, the "title" of a TV program (content), the "cast" of the TV program, a "keyword" for search contained in the brief description of the TV program, and the "genre" of the TV program are each assigned to one of the four axes. A user can use the items assigned to the axes as indices for searching for contents related to the key content.

As illustrated in FIG. 4B, the display controller 114 divides the display area into display areas A1 to A4 in radial directions from the display information C1 in the center. The display area is divided at an arbitrary angle, for example, an angle of 90°, such that each of the display areas A1 to A4 includes one of the axes assigned one of the items. In this manner, the display controller 114 generates the display areas A1 to A4 each including one of the axes.

The display controller 114 then determines a display area where display information of each of other content is to be arranged based on the item relations calculated by the relation calculation module 108. More specifically, the display controller 114 specifies one of the items assigned to one of the axes with respect to which the item relation is the highest for each of the other contents. The display controller 114 determines to arrange the display information in a display area that contains an axis assigned the specified item.

Meanwhile, the display controller 114 determines a display area where display information generated from grouping information is to be arranged based on the item relations of each content in a group. For example, the display controller 114 determines to arrange the display information in a display area corresponding to an item with respect to which the item relation is the highest among the item relations calculated for each content.

As illustrated in FIG. 5, the display controller 114 arranges pieces of display information of other contents, each in a determined display area, on a plurality of octagons F1, F2, ..., which are concentrically formed around the display information C1 of the key content as the center, correspondingly to up, down, left, and right directions of the operation button on the remote controller 120 or the keyboard.

More specifically, the display controller 114 arranges eight pieces of display information C11 to C18 of other contents on the corners of the octagon F1. Further, the display controller 114 arranges on the corners of the octagon F2 eight pieces of display information C21, C23, C25, C27, C29, C31, C33, and C35 of other contents, and also eight pieces of display information C22, C24, C26, C28, C30, C32, C34, and C36 of other contents between the respective pieces along the directions of operation. In the same manner as just described, the display controller 114 arranges on the corners of each octagon eight pieces of display information of other contents, and also eight pieces of display information of other contents between the respective pieces.

With this arrangement of display information of other contents, with respect to any piece of display information, other pieces of display information are arranged along the up, down, left, or right directions of operation. In the example of FIG. 5, display information C11, C13, C16, C18, C27, and C30 of other contents are generated from grouping information, and thus displayed in a different color from the others.

At this time, as illustrated in FIG. 6, the display controller 114 arranges pieces of display information of other contents with higher relation to the key content closer to the center at which is arranged the display information C1 of the key content. In other words, pieces of display information of other contents with lower relation to the key content are arranged more distant from the center. That is, in the example of FIG. 5, the display controller 114 arranges pieces of display information of other contents with the highest relation to the key content on the octagon F1. The display controller 114 also arranges pieces of display information of other contents in descending order of relation to the key content on the octagon F2, and other octagons (not illustrated). Additionally, the display controller 114 displays the display information of the key content in the largest size, and displays the display information of the other contents smaller as the distance from the center increases. Incidentally, the display controller 114 stores in advance the display position and size of the display information, and, after the calculation of the relation to the key content, sequentially arranges pieces of the display information of the other contents each in a predetermined size.

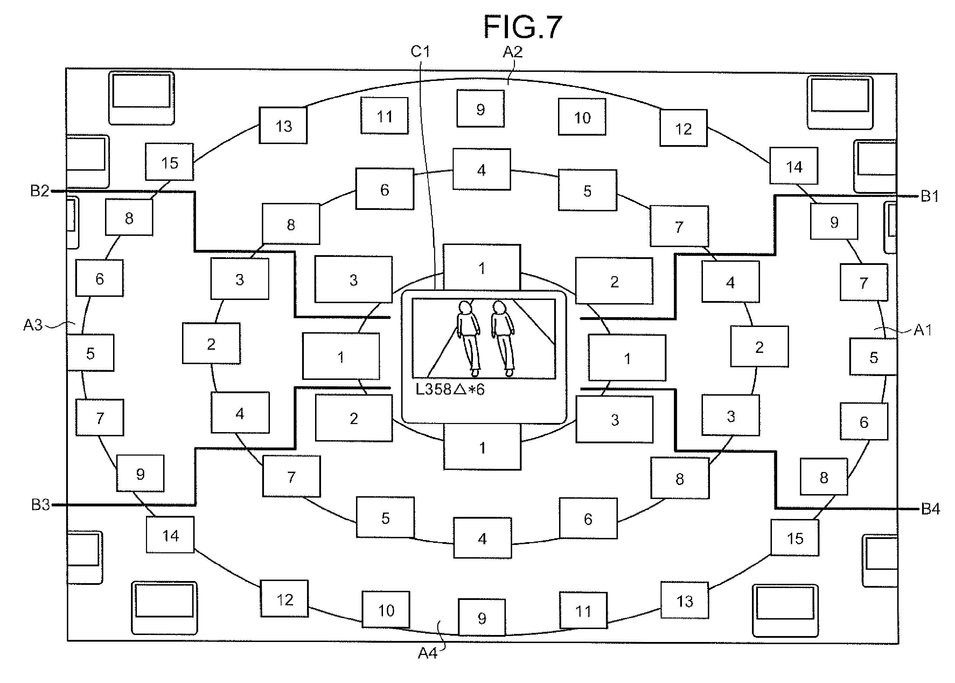

As illustrated in FIG. 7, the display controller 114 arranges pieces of display information in each of the display area A1 defined by boundary lines B1 and B4, the display area A2 defined by boundary lines B1 and B2, the display area A3 defined by boundary lines B2 and B3, and the display area A4 defined by boundary lines B3 and B4 based on the items assigned to the display areas (the axes), respectively, in the order of numbers assigned thereto. In this manner, the display controller 114 arranges pieces of display information from around the center in descending order of relation to the key content. Thus, the display controller 114 classifies the pieces of display information by the items assigned to the display areas.

While, in the example of FIG. 7, the boundary lines B1 to B4 are polygonal lines, it is not so limited. The boundary lines B1 to B4 may be straight lines or curved lines, or may not be displayed. Besides, the name of each item assigned to each of the display areas may be displayed in the display area.

In this manner, the display controller 114 generates a list information screen in which are arranged the display information of key content and display information of other contents, and displays the list information screen on the display module 115.

FIGS. 5 and 6 illustrate examples of a list information screen in the standard mode, i.e., a standard mode list information screen. Meanwhile, in the search mode, the display controller 114 displays a search mode list information screen using search mode display information on the display module, 115 as illustrated in FIG. 8. If the list information screen is switched between the standard mode and the search mode, display information of contents listed thereon and the arrangement of the display information do not change. Thus, the display controller 114 displays keyword display information D contained in the search mode display information of content in association with the standard mode display information of the content. In the search mode list information screen, as in the standard mode list information screen, pieces of display information of other contents with higher relation to key content are arranged closer to display information of the key content. Besides, the search mode list information screen contains the keyword display information D. Accordingly, the search mode list information screen is displayed on the display module 115 that contains the keyword display information D as well as the list information screen in which pieces of display information of other contents with higher relation to key content are arranged closer to the key content.

In the example of FIG. 8, as in FIGS. 5 and 6, the display information C11, C13, C16, C18, C27, and C30 of other contents generated from grouping information are displayed in a different color from the others. Besides, in the search mode list information screen, the display controller 114 may display different common keywords in the keyword display information D in different colors. For example, common keywords "Beijing" and "China" in the keyword display information D may be displayed in red and blue, respectively.

The display module 115 includes, for example, a liquid crystal display (LCD) for displaying text and an image, and displays content of a received TV program, content stored in the recorded program storage module 105, an electronic program guide stored in the EPG storage module 104, and the like. The display module 115 also displays display information indicating the details of content generated by the display information generator 113.

Although not illustrated in the drawings, the display processing device 100 further comprises a processor such as a central processing unit (CPU), and a storage medium such as a read only memory (ROM), a random access memory (ROM), and HDD. The storage medium stores in advance a computer program for controlling the display processing device 100 and setting information. The computer program stored in the storage medium comprises modules that implement the above constituent elements (the broadcast receiver 102, the video reproduction module 103, the metadata acquisition module 106, the metadata retrieving module 107, the relation calculation module 108, the grouping information generator 109, the keyword extraction module 110, the operation receiver 111, the display mode setting module 112, the display information generator 113, and the display controller 114). As real hardware, the CPU loads the computer program from the storage medium into the main memory and executes it. With this, the constituent elements, such as the broadcast receiver 102, the video reproduction module 103, the metadata acquisition module 106, the metadata retrieving module 107, the relation calculation module 108, the grouping information generator 109, the keyword extraction module 110, the operation receiver 111, the display mode setting module 112, the display information generator 113, and the display controller 114, may be implemented on the RAM.

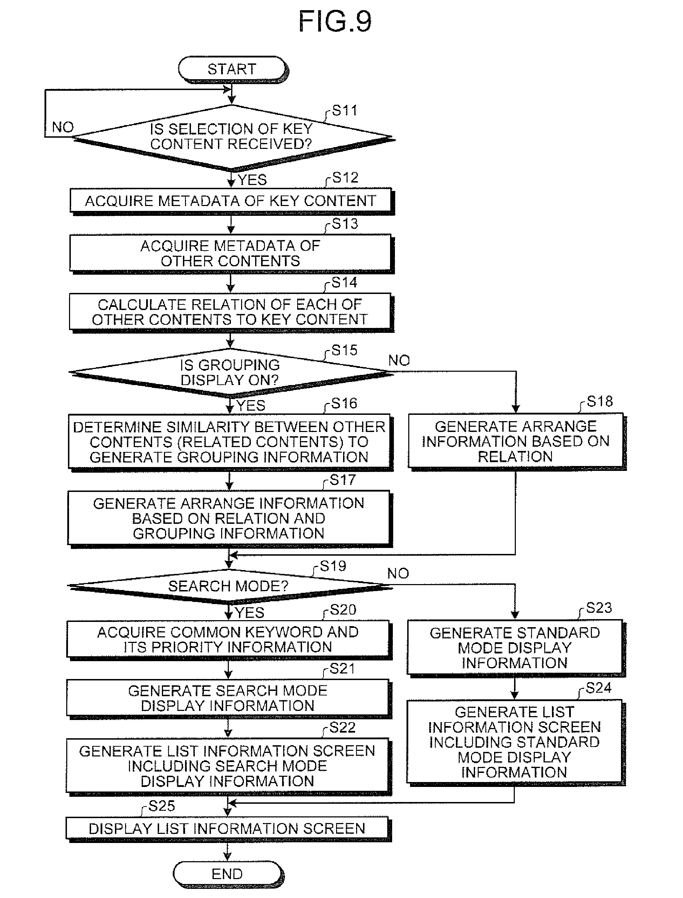

A description will now be given of the process of displaying a list information screen performed by the display processing device 100. FIG. 9 is a flowchart of the process of displaying a list information screen performed by the display processing device 100.

The operation receiver 111 waits for receiving the selection of key content thorough the remote controller 120 (No at S11) . Upon receipt of the selection of key content (Yes at S11), the metadata acquisition module 106 acquires metadata of the key content (S12). The metadata acquisition module 106 then acquires metadata of contents other than the key content (S13).

Having received the metadata of the contents through the metadata retrieving module 107, the relation calculation module 108 calculates the relation of the other contents to the key content with respect to each item contained in the metadata (S14).

If grouping display is ON (Yes at S15), the grouping information generator 109 determines the similarity between the other contents (related contents) to generate grouping information (S16). The display controller 114 generates arrange information (the axes, display areas, etc.) to arrange display information of the key content and that of the other contents based on the relation of the other contents to the key content and the grouping information (S17).

On the other hand, if grouping display is OFF (No at S15), the display controller 114 generates arrange information to arrange the display information of the key content and that of the other contents based on the relation of the other contents to the key content calculated by the relation calculation module 108 (S18).

When the display mode setting module 112 has set the display mode to the search mode (Yes at S19), the display information generator 113 acquires a common keyword and its priority information (S20), and generates search mode display information (S21). The display controller 114 then generates a list information screen (a search mode list information screen) in which are arranged pieces of the search mode display information (S22), and displays the list information screen on the display module 115 (S25).

On the other hand, when the display mode setting module 112 has set the display mode to the standard mode (No at S19), the display information generator 113 generates standard mode display information (S23) . The display controller 114 then generates a list information screen (a standard mode list information screen) in which are arranged pieces of the standard mode display information (S24), and displays the list information screen on the display module 115 (S25).

As described above, according to the first embodiment, the display processing device 100 groups similar contents such as those having the same title. Accordingly, a group of other contents can be represented by a single piece of display information. This increases the actual types of contents that can be displayed at the same time. Thus, the user can easily retrieve desired content from various types of contents, which increases the convenience of the user to retrieve content.

A second embodiment will now be described. According to the first embodiment, similar related contents are grouped and represented by a single piece of display information, and pieces of display information of other contents are displayed with display information of key content. In this case, the relation between each content in a group and the key content cannot be reflected, which may upset the positional relationship based on the relation as illustrated in FIG. 7. According to the second embodiment, display information of a group of contents can be kept arranged according to the relation. In the following, corresponding elements are designated by like reference numerals as in the first embodiment, and their description is not repeated.

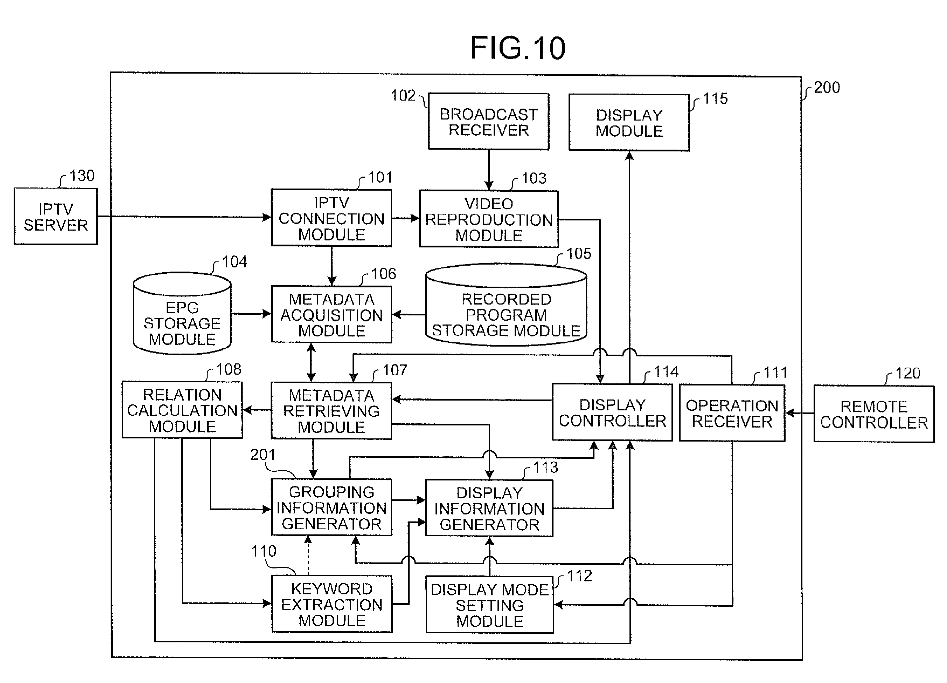

FIG. 10 is a block diagram of a display processing device 200. As illustrated in FIG. 10, the display processing device 200 comprises the IPTV connection module 101, the broadcast receiver 102, the video reproduction module 103, the EPG storage module 104, the recorded program storage module 105, the metadata acquisition module 106, the metadata retrieving module 107, the relation calculation module 108, a grouping information generator 201, the keyword extraction module 110, the operation receiver 111, the display mode setting module 112, the display information generator 113, the display controller 114, and the display module 115. A description will be given later of input from the keyword extraction module 110 to the grouping information generator 201 in a second modification of the second embodiment.

The grouping information generator 201 is basically similar to the grouping information generator 109 except that it groups similar related contents with respect to each of the display area (the axes) where display information of the related contents are to be arranged.

More specifically, the grouping information generator 201 determines related contents that are similar to each other. The grouping information generator 201 refers to the values of item relations calculated by the relation calculation module 108, and specifies an item of metadata "n" with the highest item relation with respect to each of the related contents. The grouping information generator 201 generates grouping information indicating a group of related contents with respect to which the same item is specified. The grouping information generator 201 outputs the grouping information to the display information generator 113 and the display controller 114.

As described above, the display controller 114 uses the values of the item relations as indices to determine a position (a display area) to arrange display information of other contents. Accordingly, if contents are grouped based on an item of which the item relation is the highest, grouping information can be generated from a group of related contents that are arranged in the same display area on a list information screen.

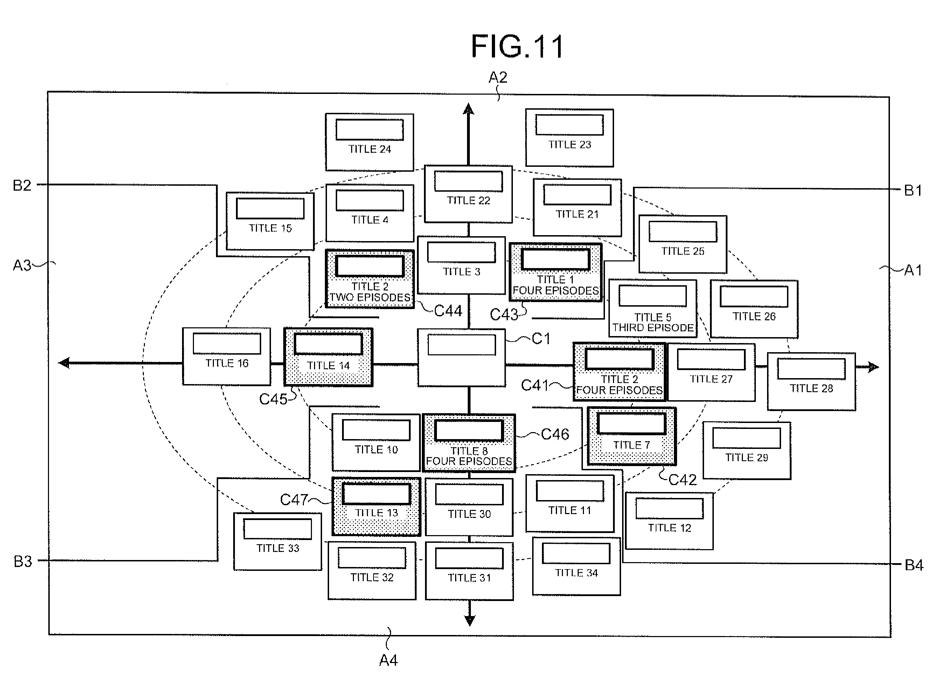

FIG. 11 illustrates an example of a list information screen generated by the display processing device 200 of the second embodiment. In the example of FIG. 11, pieces of display information C41 to C47 are generated based on grouping information, and displayed in a different color from the others (display information of other contents not belonging to a group) . Display information of grouped related contents indicates a common title. If the grouped related contents of a series, the display information indicates the volume (the number of episodes, etc.).

In FIG. 11, the display information C41 and C44 have the same title "title 2", and contents represented by the display information C41 and C44 are supposed to be determined to be similar. However, since the grouping information generator 201 groups the contents based on their positions, i.e., items assigned to axes contained in the display areas A1 and A2, related contents to be arranged in the same display area are grouped. In this manner, a group is formed of related contents to be arranged in the same display area. Accordingly, pieces of the display information C41 and C44 having the same title are arranged in different display areas.

As described above, according to the second embodiment, related contents that are determined to be similar are grouped based on the items assigned to the axes in the display areas, respectively. Thus, display information of related contents can be arranged while maintained at proper positions. This makes it possible to maintain the arrangement based on the relation.

While, in the second embodiment, related contents are grouped based on the item relations as indices to determine a display area, i.e., items assigned to axes contained in the display areas, respectively, it is not so limited, and the related contents may be grouped based on another index. This case will be described as modifications of the second embodiment.

A first modification of the second embodiment will be described. In the first modification, similar related contents are grouped based on the value of the relation RM.

The grouping information generator 201 of the first modification determines related contents that are similar to each other. The grouping information generator 201 refers to the value of the relation RM to key content calculated by the relation calculation module 108. The grouping information generator 201 generates grouping information indicating a group of related contents with the same relation RM.

As described above, the display controller 114 uses the values of the relation RM as an index to determine a position in a display area to arrange display information of other contents. Accordingly, if related contents with the same relation RM are grouped, grouping information can be generated from related contents that are arranged at substantially the same position in a display area. Thus, display information of a group of related contents can be arranged while the distance from display information of key content is maintained. This makes it possible to maintain the arrangement based on the relation.

The second modification of the second embodiment will be described. In the second modification, similar related contents are grouped based on the same common keyword. As illustrated in FIG. 10, a common keyword extracted by the keyword extraction module 110 is input to the grouping information generator 201.

The grouping information generator 201 of the second modification determines related contents that are similar to each other. The grouping information generator 201 refers to common keywords extracted by the keyword extraction module 110. The grouping information generator 201 generates grouping information indicating a group of related contents with the same common keyword.

As described above, the keyword extraction module 110 extracts as a common keyword an item contributing to the degree of the relation RM from items of metadata related to the calculation of the relation RM. Accordingly, if related contents with the same common keyword are grouped, grouping information can be generated from related contents that are arranged at substantially the same position in a display area.

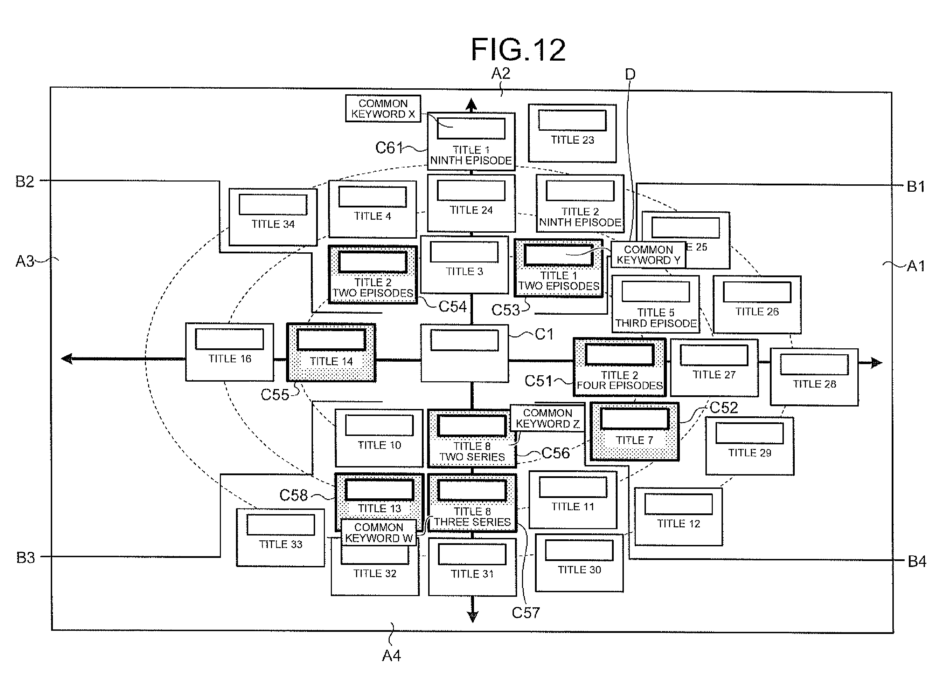

FIG. 12 illustrates an example of a list information screen generated by the display processing device 200 of the second modification. In the example of FIG. 12, pieces of display information C51 to C58 are generated based on grouping information, and displayed in a different color from the others (display information of other contents not belonging to a group such as display information C61). Common keywords extracted by the keyword extraction module 110 are indicated as the keyword display information D.

In FIG. 12, the display information C53 and C61 have the same title "title 1", and contents represented by the display information C53 and C61 are supposed to be determined to be similar. However, since the grouping information generator 201 groups the contents based on their common keywords, related contents with the same common keyword are grouped. As a result, as illustrated in FIG. 12, content with a different common keyword is excluded from members of a group. Accordingly, pieces of the display information C53 and C61 having the same title are arranged separately.

As described above, according to the second modification, related contents that are determined to be similar are grouped based on the same common keyword. Thus, display information of related contents can be arranged while maintained at proper positions. This makes it possible to maintain the arrangement based on the relation.

A third embodiment will now be described. According to the embodiments described above, similar related contents are grouped and represented by a single piece of display information. In this case, depending on a display area where a group of related contents is arranged, the display area cannot be used effectively.

For example, contents to be grouped have a title or the like similar to that of key content. If such contents are grouped, a few pieces of display information are arranged in the display area assigned the item "title". Besides, when a small number of pieces of display information are arranged in a certain display area, if contents represented by display information to be arranged in the display area are grouped, the number of pieces of display information in the display area may be substantially reduced. This results in a waste of space in the display area that is secured to display a number of pieces of display information. Thus, the display area cannot be used effectively.

In view of this, according to the third embodiment, the display areas are used effectively. In the following, corresponding elements are designated by like reference numerals as in the first embodiment, and their description is not repeated.

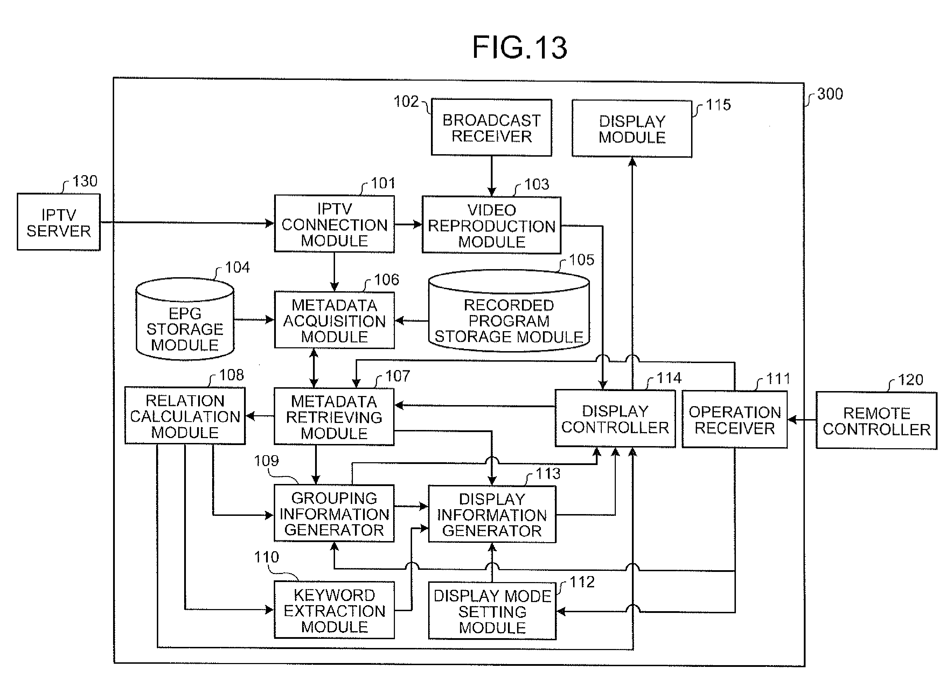

FIG. 13 is a block diagram of a display processing device 300. As illustrated in FIG. 13, the display processing device 300 comprises the IPTV connection module 101, the broadcast receiver 102, the video reproduction module 103, the EPG storage module 104, the recorded program storage module 105, the metadata acquisition module 106, the metadata retrieving module 107, the relation calculation module 108, a grouping information generator 301, the keyword extraction module 110, the operation receiver 111, the display mode setting module 112, the display information generator 113, the display controller 114, and the display module 115.

The grouping information generator 301 is basically similar to the grouping information generator 109 except that it controls the grouping of related contents so that those whose display information is arranged in a certain display area are not grouped.

The grouping information generator 301 determines related contents that are similar to each other. The grouping information generator 301 refers to the values of item relations calculated by the relation calculation module 108, and specifies an item of metadata "n" with the highest item relation with respect to each of the related contents. When the specified item satisfies a predetermined condition, the grouping information generator 301 inhibits the grouping of related contents with respect to which the item is specified upon generation of a list information screen.

For example, when the number of pieces of display information arranged in a display area is less than a predetermined threshold upon generation of a list information screen, the item assigned to the axis contained in the display area may be regarded as satisfying the predetermined condition. More specifically, the grouping information generator 301 refers to the values of item relations calculated by the relation calculation module 108 with respect to each of all contents, and counts the number of pieces of display information for each item the item relation of which is the highest. When the count is less than a predetermined threshold, the grouping information generator 301 determines not to group related contents with respect to the item.

For another example, the user may specify an item with respect to which contents are not to be grouped using the remote controller 120.

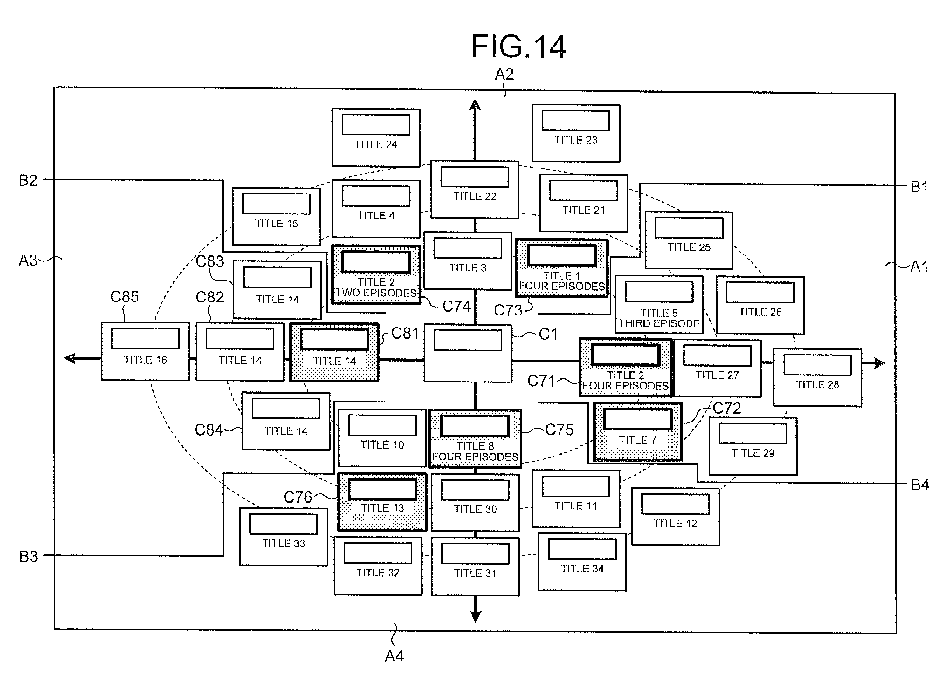

FIG. 14 illustrates an example of a list information screen generated by the display processing device 300 of the third embodiment. In the example of FIG. 14, pieces of display information C71 to C76 are generated based on grouping information, and displayed in a different color from the others (display information of other contents not belonging to a group).

When it is determined in advance that contents are not to be grouped in a display area if the number of pieces of their display information is less than six therein, the grouping information generator 301 determines that pieces of display information C81 to C85 arranged in the display area A3 satisfy this condition. Accordingly, the grouping information generator 301 controls the grouping of contents so that those represented by the display information C81 to C85 are not to be grouped. As a result, the pieces of the display information C81 to C85 of the related contents with the same title (title 14) are not grouped and displayed individually in the display area A3.

In this manner, if the number of pieces of display information arranged in a display area is less than a predetermined threshold, the grouping information generator 301 inhibits the grouping of related contents represented by the display information in the display area. Thus, it is possible to prevent a waste of space in the display area, and thereby it is possible to use the display area effectively.

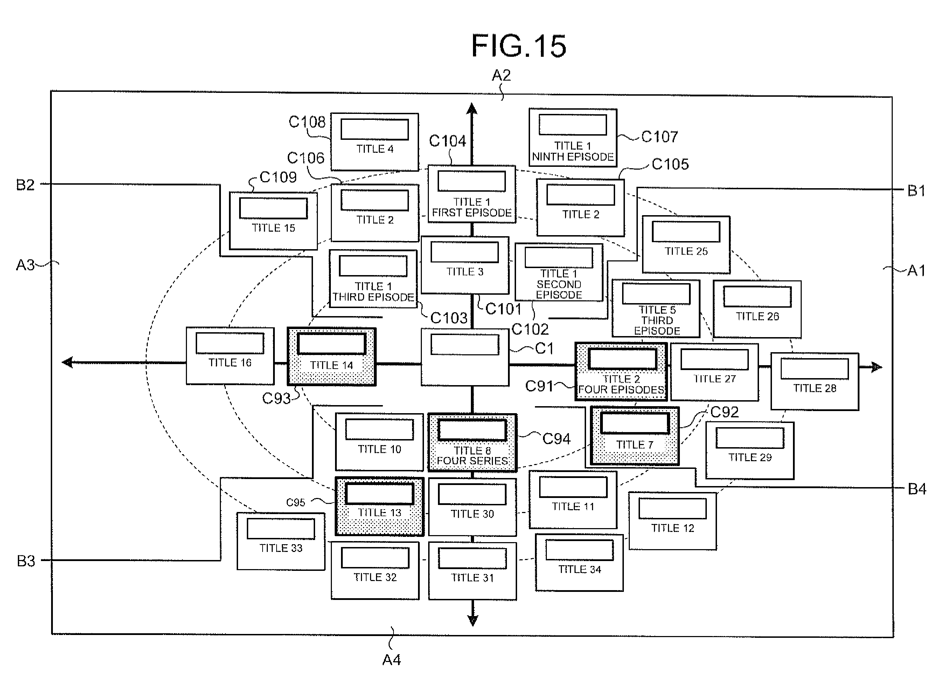

FIG. 15 illustrates another example of a list information screen generated by the display processing device 300 of the third embodiment. In the example of FIG. 15, pieces of display information C91 to C95 are generated based on grouping information, and displayed in a different color from the others (display information of other contents not belonging to a group such as display information C101 to C109).

When it is determined in advance that contents are not to be grouped with respect to an item (for example, title) assigned to the axis contained in the display area A2, the grouping information generator 301 determines that contents represented by the display information C101 to C109 arranged in the display area A2 satisfy this condition. Accordingly, the grouping information generator 301 controls the grouping of contents so that those represented by the display information C101 to C109 are not to be grouped. That is, contents corresponding to the item of the display area A2 are not grouped if having the same title. As a result, pieces of display information of related contents with the same title, such as the display information C102, C103, C104, and C107 with "title 1" and the display information C105 and C106 with "title 2", are displayed individually in the display area A2.

As described above, according to the third embodiment, the grouping of contents is inhibited with respect to a specific item. Thus, display information is generated for each of related contents arranged in a display area having an axis assigned the item.

A fourth embodiment will now be described. According to the embodiments described above, similar related contents are grouped and represented by a single piece of display information. In this case, for example, the user may wish to check individual pieces of display information of related contents highly related to key content. In view of this, according to the fourth embodiment, related contents are grouped only when their relation to key content is below a predetermined threshold. In the following, corresponding elements are designated by like reference numerals as in the first embodiment, and their description is not repeated.

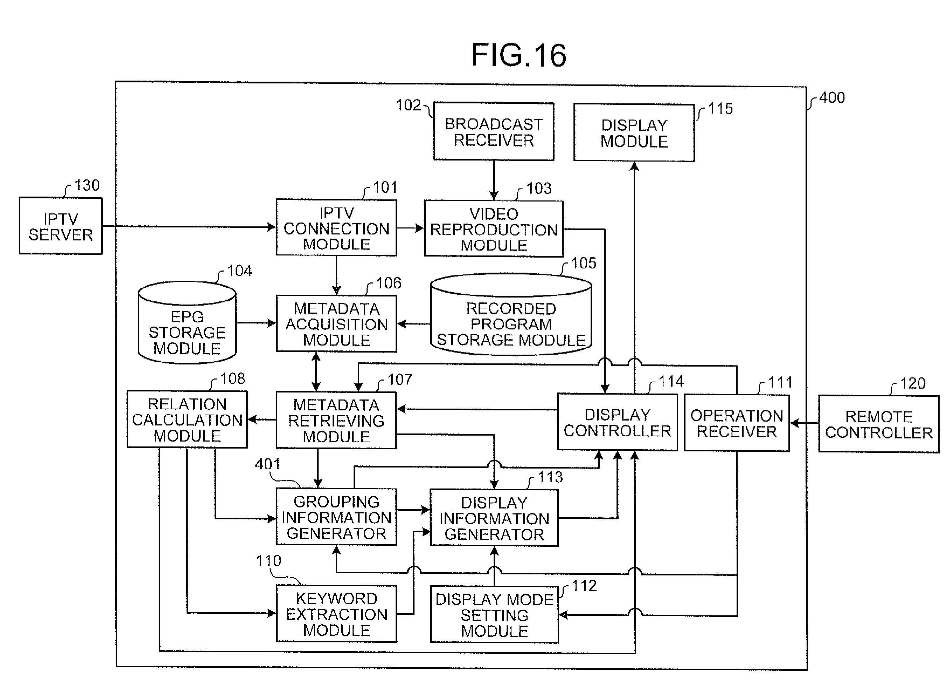

FIG. 16 is a block diagram of a display processing device 400. As illustrated in FIG. 16, the display processing device 400 comprises the IPTV connection module 101, the broadcast receiver 102, the video reproduction module 103, the EPG storage module 104, the recorded program storage module 105, the metadata acquisition module 106, the metadata retrieving module 107, the relation calculation module 108, a grouping information generator 401, the keyword extraction module 110, the operation receiver 111, the display mode setting module 112 the display information generator 113, the display controller 114, and the display module 115.

The grouping information generator 401 is basically similar to the grouping information generator 109 except that it groups related contents when their relation to key content is below a predetermined threshold.

More specifically, the grouping information generator 401 determines related contents that are similar to each other. The grouping information generator 401 refers to the value of the relation RM to key content calculated by the relation calculation module 108. The grouping information generator 201 generates grouping information indicating a group of related contents with the relation RM below a predetermined threshold. An arbitrary value can be set as the threshold, i.e., an index to determine whether to group contents.

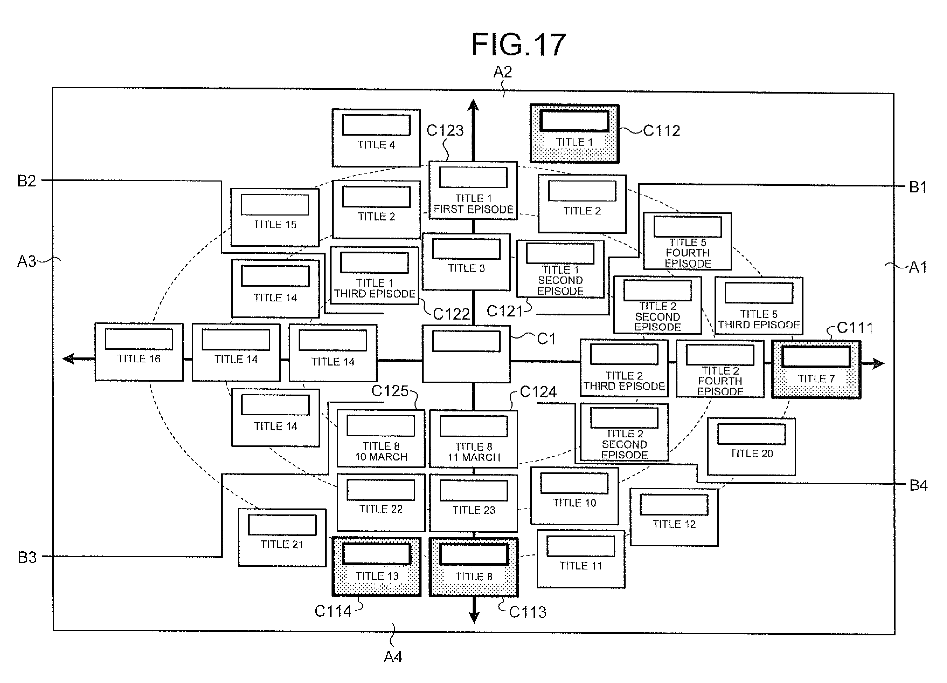

FIG. 17 illustrates an example of a list information screen generated by the display processing device 400 of the fourth embodiment. In the example of FIG. 17, pieces of display information C111 to C114 are generated based on grouping information, and displayed in a different color from the others (display information of other contents not belonging to a group such as display information C121 to C125).

As described above, the relation of other contents to key content is lower as the distance of their display information from the center increases. Upon grouping related contents with the same title "title 1", the grouping information generator 401 groups related contents the relation RM of which is below the predetermined threshold. As a result, as indicated in the display area A2, pieces of the display information C121, C122, and C123 are individually generated for related contents having the relation RM at a predetermined level, and each of them is arranged at a predetermined position. On the other hand, relatively less related contents having the relation RM below the predetermined level are grouped by the grouping information generator 401. Thus, the display information C112 generated from the grouping information is arranged at a predetermined position.

Similarly, upon grouping related contents with the same title "title 8", the grouping information generator 401 groups related contents the relation RM of which is below the predetermined threshold. As a result, as indicated in the display area A4, pieces of the display information C124 and C125 are individually generated for related contents having the relation RM at the predetermined level, and each of them is arranged at a predetermined position. On the other hand, relatively less related contents having the relation RM below the predetermined level are grouped by the grouping information generator 401. Thus, the display information C113 generated from the grouping information is arranged at a predetermined position.

As described above, according to the fourth embodiment, only related contents having the relation RM below a predetermined threshold are grouped. Thus, display information is generated for each of other contents relatively highly related to key content.

A fifth embodiment will now be described. According to the embodiments described above, when key content is selected, similar related contents are grouped from among other contents related to the key content. According to the fifth embodiment, similar contents are grouped in advance in the.EPG storage module 104, the recorded program storage module 105, and the like. In the following, corresponding elements are designated by like reference numerals as in the first embodiment, and their description is not repeated.

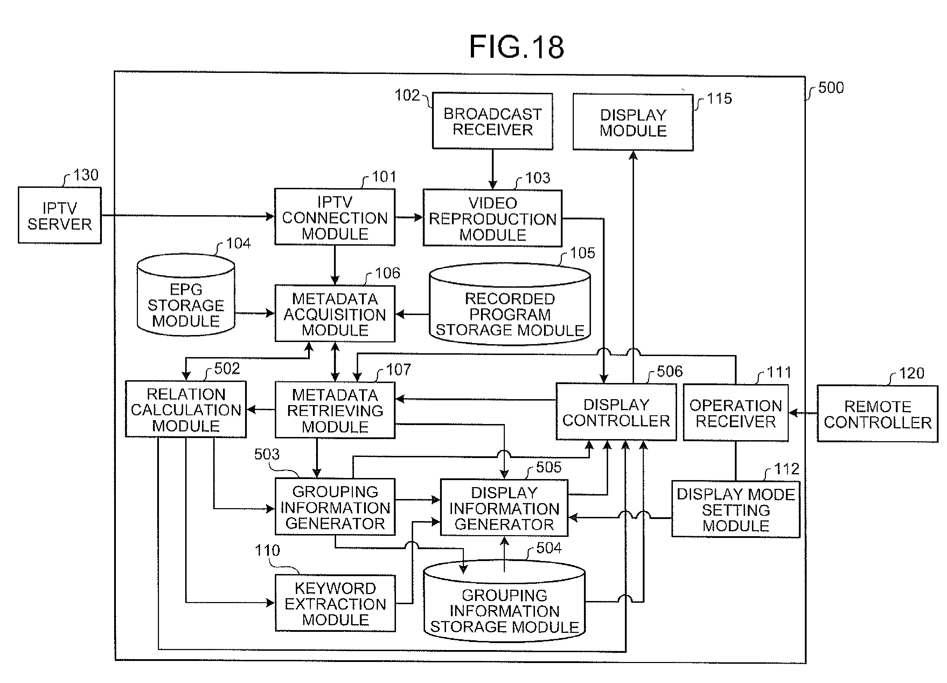

FIG. 18 is a block diagram of a display processing device 500. As illustrated in FIG. 18, the display processing device 500 comprises the IPTV connection module 101, the broadcast receiver 102, the video reproduction module 103, the EPG storage module 104, the recorded program storage module 105, a metadata acquisition module 501, the metadata retrieving module 107, a relation calculation module 502, a grouping information generator 503, the keyword extraction module 110, the operation receiver 111, the display mode setting module 112, a display information generator 505, a display controller 506, and the display module 115.

The metadata acquisition module 501 is basically similar to the metadata acquisition module 106. Further, the metadata acquisition module 501 acquires metadata of contents from the EPG storage module 104, the recorded program storage module 105, the IPTV server 130, and the like at regular time intervals, and outputs it to the relation calculation module 502.

The relation calculation module 502 is basically similar to the relation calculation module 108. Further, the relation calculation module 502 calculates the relation RM between the contents based on the metadata received from the metadata acquisition module 501 for each item (for example, title, channel, etc.) contained in the metadata. The relation calculation module 502 the relation RM in the same manner as described previously for the relation calculation module 108.

The grouping information generator 503 sets contents with the relation RM of a predetermined value or higher as related contents based on the value of the relation RM between the contents calculated by the relation calculation module 502. Further, the grouping information generator 503 calculates the similarity between the related contents based on metadata of the contents received from the metadata acquisition module 501. The grouping information generator 503 generates grouping information indicating a group of related contents which are determined to be similar.

For a group of similar related contents, the grouping information generator 503 generates a new single piece of metadata from pieces of metadata of the related contents. The grouping information generator 503 sets relation for the group of the related contents, and stores grouping information containing the relation in a grouping information storage module 504.

The new metadata may be generated by performing the logical AND or logical OR of the metadata of the similar related contents. The relation of the group of the related contents may be obtained in various manners. For example, the relation (and item relations) of representative one of the related contents may be set as the relation of the group. Alternatively, by extracting the highest item relations calculated for the related contents, respectively, a sum of the highest item relations may be set as the relation of the group.

The grouping information storage module 504 is a storage medium such as HDD or memory for storing grouping information generated by the grouping information generator 503.

The display information generator 505 is basically similar to the display information generator 113. Further, the display information generator 505 generates a single piece of display information representing a group of related contents indicated by grouping information stored in the grouping information storage module 504 based on metadata contained in the grouping information. Incidentally, the display information generator 505 does not generate display information for each of the related contents in the group.

The display controller 506 is basically similar to the display controller 114. Further, display controller 506 generates a list information screen that displays the display information generated by the display information generator 505 based on the grouping information. On the list information screen, the display information is arranged based on the relation (item relations) contained in the grouping information.

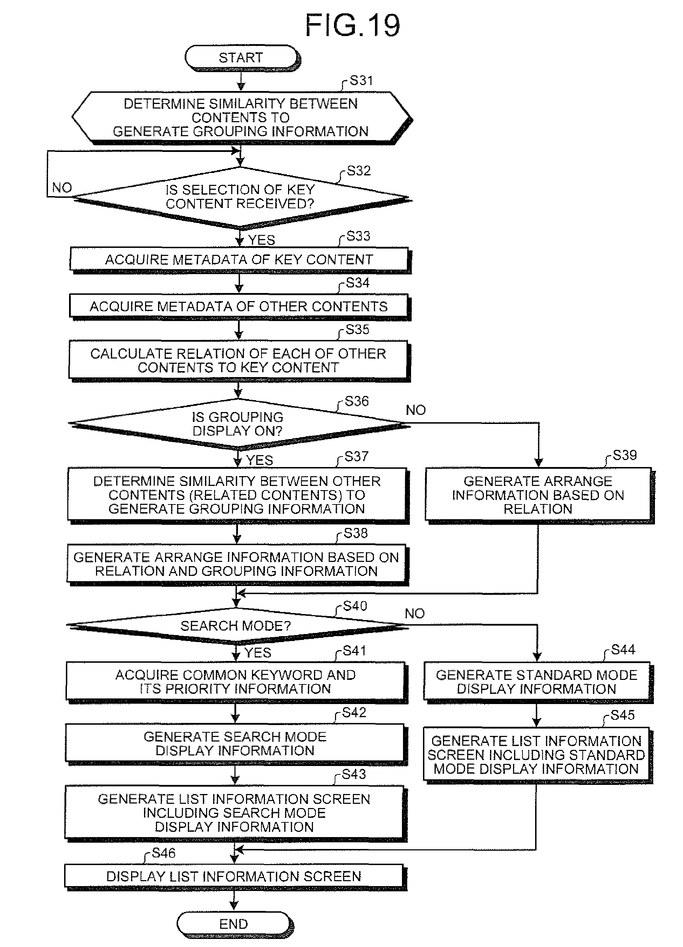

A description will now be given of the process of displaying a list information screen performed by the display processing device 500. FIG. 19 is a flowchart of the process of displaying a list information screen performed by the display processing device 500.

First, the grouping information generator 503 determines related contents that are similar to each other. The grouping information generator 503 generates grouping information indicating a group of similar related contents and a piece of metadata for the group of the contents. The grouping information generator 503 stores the grouping information in the grouping information storage module 504 in association with the metadata (S31).

The operation receiver 111 waits for receiving the selection of key content thorough the remote controller 120 (No at S32). Upon receipt of the selection of key content (Yes at S32), the metadata acquisition module 501 acquires metadata of the key content (S33). The metadata acquisition module 501 then acquires metadata of contents other than the key content (S34).

Having received the metadata of the contents through the metadata retrieving module 107, the relation calculation module 502 calculates the relation of the other contents to the key content with respect to each item contained in the metadata (S35).

If grouping display is ON (Yes at 536), the grouping information generator 503 determines the similarity between the other contents (related contents) to generate grouping information (S37). The display controller 506 generates arrange information (the axes, display areas, etc.) to arrange display information of the key content and that of the other contents based on the relation of the other contents to the key content and the grouping information (S38).

On the other hand, if grouping display is OFF (No at S36), the display controller 506 generates arrange information to arrange the display information of the key content and that of the other contents based on the relation of the other contents to the key content calculated by the relation calculation module 502 (S39).

When the display mode setting module 112 has set the display mode to the search mode (Yes at S40), the display information generator 505 acquires a common keyword and its priority information (S41), and generates search mode display information (S42). The display controller 506 then generates a list information screen (a search mode list information screen) in which are arranged pieces of the search mode display information (S43), and displays the list information screen on the display module 115 (S46).

On the other hand, when the display mode setting module 112 has set the display mode to the standard mode (No at S40), the display information generator 505 generates standard mode display information (S44). The display controller 506 then generates a list information screen (a standard mode list information screen) in which are arranged pieces of the standard mode display information (S45), and displays the list information screen on the display module 115 (S46).

As described above, according to the fifth embodiment, the display processing device 500 groups similar contents such as those having the same title. Accordingly, a group of other contents can be represented by a single piece of display information. This increases the actual types of contents that can be displayed at the same time. Thus, the user can easily retrieve desired content from various types of contents, which increases the convenience of the user to retrieve content.

The grouping information generator may group contents in manners described in the first to fourth embodiments, selectively or in combination, according to an instruction from the remote controller 120.

The computer program may be executed on a computer to realize the same function as the display processing device. The computer program may be stored in advance in a storage medium of the display processing device. The computer program may also be provided as being stored in a computer-readable storage medium, such as a compact disc-read only memory (CD-ROM), a flexible disk (FD), a compact disc recordable (CD-R), and a digital versatile disc (DVD), as a file in an installable or executable format.

The computer program may also be stored in a computer connected via a network such as the Internet so that it can be downloaded therefrom via the network. The computer program may also be provide or distributed via a network such as the Internet.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A display processing device comprising:

   an operation receiver (111) configured to receive operation to select key content as a search key;
   a relation calculation module (108, 502) configured to calculate relation between the key content and each of second contents other than the key content with respect to each of a plurality of items;
   a similarity determination module (109, 201, 301, 401, 503) configured to compare the second contents to determine similarity between the second contents;
   a grouping module (109, 201, 301, 401, 503) configured to group second contents determined to be similar by the similarity determination module (109, 201, 301, 401, 503);
   a display information generator (113, 505) configured to generate first display information representing the key content, pieces of second display information representing the second contents, respectively, and third display information representing a group of the second contents grouped by the grouping module (109, 201, 301, 401, 503); and
   a display module (114, 506) configured to display a display screen that is radially divided from a predetermined position into predetermined areas each corresponding to one of the items, in which the first display information is arranged at the predetermined position, and the second display information and the third display information are each arranged in corresponding one of the predetermined areas based on the relation calculated by the relation calculation module (108, 502).

2. The display processing device of Claim 1, wherein the grouping module (201) is configured to group, among second contents determined to be similar, second contents represented by pieces of second display information to be arranged in a same predetermined area.

3. The display processing device of Claim 2, wherein
   the display module (114) is configured to arrange the second display information in one of the predetermined areas corresponding to an item with respect to which the relation is highest, and determine display position of the second display information in the predetermined area based on a sum of relations calculated for the items, respectively, and
   the grouping module (201) is configured to group, among the second contents determined to be similar, second contents having a highest relation with respect to a same item.

4. The display processing device of Claim 1, wherein the grouping module (201) is configured to group, among second contents determined to be similar, second contents represented by pieces of second display information to be arranged at substantially a same position.

5. The display processing device of Claim 4, wherein
   the display module (114) is configured to arrange the second display information in one of the predetermined areas corresponding to an item with respect to which the relation is highest, and determine display position of the second display information in the predetermined area based on a sum of relations calculated for the items, respectively, and
   the grouping module (201) is configured to group, among the second contents determined to be similar, second contents with a same sum of relations calculated for the items, respectively.

**6.** The display processing device of any one of Claims 1 to 5, further comprising a keyword extraction module (110) configured to extract as a common keyword an item contributing to a degree of the relation from items related to calculation of the relation for each of the second contents, wherein
the grouping module (201) is configured to group, among second contents determined to be similar, second contents having a same common keyword.

**7.** The display processing device of Claim 1, wherein the grouping module (301) is configured not to group, among second contents determined to be similar, second contents represented by pieces of second display information to be arranged in a predetermined area corresponding to a predetermined item.

**8.** The display processing device of Claim 7, wherein
the display module (114) is configured to arrange the second display information in one of the predetermined areas corresponding to an item with respect to which the relation is highest, and determine display position of the second display information in the predetermined area based on a sum of relations calculated for the items, respectively, and
the grouping module (301) is configured not to group, among the second contents determined to be similar, second contents having a highest relation with respect to the predetermined item.

**9.** The display processing device of Claim 1, wherein the grouping module (301) is configured not to group, among second contents determined to be similar, second contents represented by pieces of second display information to be arranged in a predetermined area in which are arranged pieces of second display information less than a predetermined value.

**10.** The display processing device of Claim 9, wherein
the display module (114) is configured to arrange the second display information in one of the predetermined areas corresponding to an item with respect to which the relation is highest, and determine display position of the second display information in the predetermined area based on a sum of relations calculated for the items, respectively, and
the grouping module (401) is configured to counts pieces of display information for each item with respect to which the relation is highest and not to group, among the second contents determined to be similar, second contents having highest relation
with respect to an item with a count of pieces of display information less than a predetermined value.

**11.** The display processing device of any one of Claims 1 to 10, wherein the grouping module (401) is configured to group, among second contents determined to be similar, second contents having a sum of relations calculated for the items, respectively, is less than a predetermined value.

**12.** The display processing device of any one of Claims 1 to 11, further comprising a first receiver (111) configured to receive instruction information instructing to turn on or off grouping of the second contents performed by the grouping module (109, 201, 301, 401, 503), wherein
when the first receiver (111) receives the instruction information instructing to turn on the grouping of the second contents, the grouping module (109, 201, 301, 401, 503) groups the second contents.

**13.** The display processing device of Claim 1, wherein the relation calculation module (108, 502) is configured to calculate, based on metadata of the key content and metadata of each of the second content, the relation between the key content and the second content with respect to each of the items contained in the metadata.

**14.** The display processing device of Claim 1, further comprising a metadata generator (503) configured to generate a piece of metadata from pieces of metadata of related contents in a group, wherein
the relation calculation module (502) is configured to calculate, based on metadata of the key content and the metadata of the group generated by the metadata generator (503), relation between the key content and the group with respect to each of the items contained in the metadata.

**15.** A display processing method comprising:

an operation receiver receiving operation to select key content as a search key;
a relation calculation module calculating relation between the key content and each of second contents other than the key content with respect to each of a plurality of items;
a similarity determination module comparing the second contents to determine similarity between the second contents;

a grouping module grouping second contents determined to be similar;

a display information generator generating first display information representing the key content, pieces of second display information representing the second contents, respectively, and third display information representing a group of the second contents; and

a display module displaying a display screen that is radially divided from a predetermined position into predetermined areas each corresponding to one of the items, in which the first display information is arranged at the predetermined position, and the second display information and the third display information are each arranged in corresponding one of the predetermined areas based on the relation calculated by the relation calculation module.

16. A computer program product embodied on a computer-readable storage medium and comprising code that, when executed, causes a computer to perform:

receiving operation to select key content as a search key;

calculating relation between the key content and each of second contents other than the key content with respect to each of a plurality of items;

comparing the second contents to determine similarity between the second contents;

grouping second contents determined to be similar;

generating first display information representing the key content, pieces of second display information representing the second contents, respectively, and third display information representing a group of the second contents; and

displaying a display screen that is radially divided from a predetermined position into predetermined areas each corresponding to one of the items, in which the first display information is arranged at the predetermined position, and the second display information and the third display information are each arranged in corresponding one of the predetermined areas based on the relation calculated by the relation calculation module.

# FIG.1

# FIG.2

TITLE: LUNCHTIME COMEDY SHOW
CHANNEL: 00
DATE: AUG. 1, 2008 12:00-12:40
CAST: XXXXX, YYYYY
SUBTITLE: GREAT LINE UP OF COMEDIANS INVITE YOU TO
ENJOY NOON OF HILARIOUS ENTERTAINMENT
GENRE: COMEDY

# FIG.3

| | METADATA OF KEY CONTENT |
|---|---|
| TITLE | XX TV 50TH ANNIVERSARY SPECIAL TRAVELS IN ASIA |
| DETAILED INFORMATION | SHOW YOU SPECTACULAR VIEWS IN ASIA<br>A (ADVENTURER) TRACES ROOTS OF GREAT WALL OF CHINA<br>B (CAMERAMAN) CLOSES IN ON SECRET OF ANGKOR WAT<br>C (ACTRESS) CLIMBS HIMALAYA LIT BY SUNSET<br>NARRATOR: D |
| GENRE | VARIETY SHOW/ TRAVEL |
| BROADCAST STATION | XX TV |
| BROADCAST DATE AND TIME | 2009/11/25 19:00-21:00 |

| | METADATA OF OTHER CONTENT |
|---|---|
| TITLE | QUIZ WONDERS IN WORLD: ASIA |
| DETAILED INFORMATION | PRESENT FASCINATING EPISODES IN WORLD IN FORM OF QUIZ<br>ASIA IS FEATURED IN THIS MONTH<br>TODAY'S SHOW FEATURES HIMALAYA<br>NUMBER OF WONDERS OF HIMALAYA THAT FASCINATE ADVENTURES<br>TODAY'S GUEST PANELIST IS D WHO STARS IN BLOCKBUSTER MOVIE RELEASED LAST MONTH |
| GENRE | VARIETY SHOW/ QUIZ |
| BROADCAST STATION | XX TV |
| BROADCAST DATE AND TIME | 2009/10/02 15:00-16:00 |

⇩

COMMON KEYWORD:
ASIA, HIMALAYA, ADVENTURER, D, VARIETY, XX TV

EP 2 357 802 A1

# FIG.4A

# FIG.4B

# FIG.5

EP 2 357 802 A1

# FIG.6

# FIG.7

L358△*6

# FIG.8

EP 2 357 802 A1

# FIG.9

START

S11
IS SELECTION OF KEY CONTENT RECEIVED?
NO
YES

S12
ACQUIRE METADATA OF KEY CONTENT

S13
ACQUIRE METADATA OF OTHER CONTENTS

S14
CALCULATE RELATION OF EACH OF OTHER CONTENTS TO KEY CONTENT

S15
IS GROUPING DISPLAY ON?
NO
YES

S16
DETERMINE SIMILARITY BETWEEN OTHER CONTENTS (RELATED CONTENTS) TO GENERATE GROUPING INFORMATION

S18
GENERATE ARRANGE INFORMATION BASED ON RELATION

S17
GENERATE ARRANGE INFORMATION BASED ON RELATION AND GROUPING INFORMATION

S19
SEARCH MODE?
NO
YES

S20
ACQUIRE COMMON KEYWORD AND ITS PRIORITY INFORMATION

S23
GENERATE STANDARD MODE DISPLAY INFORMATION

S21
GENERATE SEARCH MODE DISPLAY INFORMATION

S24
GENERATE LIST INFORMATION SCREEN INCLUDING STANDARD MODE DISPLAY INFORMATION

S22
GENERATE LIST INFORMATION SCREEN INCLUDING SEARCH MODE DISPLAY INFORMATION

S25
DISPLAY LIST INFORMATION SCREEN

END

# FIG.10

EP 2 357 802 A1

# FIG.11

EP 2 357 802 A1

FIG.12

EP 2 357 802 A1

# FIG.13

FIG.14

# FIG.15

EP 2 357 802 A1

# FIG.16

FIG.16

EP 2 357 802 A1

FIG.17

# FIG.18

# FIG.19

START

S31
DETERMINE SIMILARITY BETWEEN
CONTENTS TO
GENERATE GROUPING INFORMATION

S32
IS SELECTION OF KEY
CONTENT RECEIVED? — NO

YES — S33
ACQUIRE METADATA OF KEY CONTENT

S34
ACQUIRE METADATA OF OTHER CONTENTS

S35
CALCULATE RELATION OF EACH OF OTHER
CONTENTS TO KEY CONTENT

S36
IS GROUPING
DISPLAY ON? — NO

YES — S37
DETERMINE SIMILARITY BETWEEN OTHER
CONTENTS (RELATED CONTENTS) TO
GENERATE GROUPING INFORMATION

S39
GENERATE ARRANGE
INFORMATION BASED ON
RELATION

S38
GENERATE ARRANGE INFORMATION BASED ON
RELATION AND GROUPING INFORMATION

S40
SEARCH MODE? — NO

YES — S41
ACQUIRE COMMON KEYWORD AND
ITS PRIORITY INFORMATION

S44
GENERATE STANDARD MODE
DISPLAY INFORMATION

S42
GENERATE SEARCH MODE
DISPLAY INFORMATION

S45
GENERATE LIST INFORMATION
SCREEN INCLUDING STANDARD
MODE DISPLAY INFORMATION

S43
GENERATE LIST INFORMATION SCREEN
INCLUDING SEARCH MODE
DISPLAY INFORMATION

S46
DISPLAY LIST INFORMATION SCREEN

END

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 043 047 A2 (TOSHIBA KK [JP])<br>1 April 2009 (2009-04-01)<br>* abstract; figures 1-38 *<br>* paragraph [0012] - paragraph [0030] *<br>* paragraph [0050] - paragraph [0063] *<br>* paragraph [0085] - paragraph [0097] *<br>* paragraph [0114] - paragraph [0168] *<br>* paragraph [0186] - paragraph [0194] *<br>* paragraph [0199] - paragraph [0222] *<br>----- | 1-16 | INV.<br>H04N5/445 |
| A | WO 03/015408 A1 (KONINKL PHILIPS ELECTRONICS NV [NL])<br>20 February 2003 (2003-02-20)<br>* page 3, line 1 - page 4, line 15 *<br>* page 10, line 34 - page 11, line 17 *<br>* page 12, line 27 - page 13, line 26 *<br>----- | 1-16 | |
| A | US 2006/066755 A1 (KOWALD JULIE R [AU] ET AL KOWALD JULIE RAE [AU] ET AL)<br>30 March 2006 (2006-03-30)<br>* paragraph [0006] - paragraph [0013] *<br>* paragraph [0042] - paragraph [0045] *<br>* figures 4-6,8 *<br>----- | 1-16 | TECHNICAL FIELDS<br>SEARCHED (IPC)<br><br>H04N |
| A | JP 2001 292383 A (SONY CORP)<br>19 October 2001 (2001-10-19)<br>* paragraph [0022] - paragraph [0026]; figures 2,4-7 *<br>----- | 1-16 | |
| A | WO 2004/104773 A2 (COMCAST CABLE HOLDING LLC [US]; ELIA ERIC J [US]; KELLY LESLIE A [US];) 2 December 2004 (2004-12-02)<br>* the whole document *<br>----- | 1-16 | |

The present search report has been drawn up for all claims

| Place of search | Date of completion of the search | Examiner |
|---|---|---|
| Munich | 18 January 2011 | Biro, Zoltan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 2 357 802 A1**

## ANNEX TO THE EUROPEAN SEARCH REPORT
## ON EUROPEAN PATENT APPLICATION NO.

EP 10 17 1802

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2011

| Patent document cited in search report | | | Publication date | Patent family member(s) | | | Publication date |
|---|---|---|---|---|---|---|---|
| EP 2043047 | A2 | | 01-04-2009 | CN | 101398851 | A | 01-04-2009 |
| | | | | JP | 2009080580 | A | 16-04-2009 |
| | | | | US | 2009080698 | A1 | 26-03-2009 |
| WO 03015408 | A1 | | 20-02-2003 | CN | 1539240 | A | 20-10-2004 |
| | | | | EP | 1417836 | A1 | 12-05-2004 |
| | | | | JP | 4201706 | B2 | 24-12-2008 |
| | | | | JP | 2004538725 | T | 24-12-2004 |
| | | | | US | 2003051246 | A1 | 13-03-2003 |
| US 2006066755 | A1 | | 30-03-2006 | JP | 4262229 | B2 | 13-05-2009 |
| | | | | JP | 2006094520 | A | 06-04-2006 |
| JP 2001292383 | A | | 19-10-2001 | NONE | | | |
| WO 2004104773 | A2 | | 02-12-2004 | CA | 2525587 | A1 | 02-12-2004 |
| | | | | EP | 1623301 | A2 | 08-02-2006 |
| | | | | JP | 2007516646 | T | 21-06-2007 |
| | | | | US | 2005010955 | A1 | 13-01-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009080580 A